# FASCICULE DE BREVET EUROPEEN

(11) **EP 3 924 673 B1**
(45) Date de publication et mention de la délivrance du brevet: **31.01.2024**
(21) Numéro de dépôt: 20705429.7
(22) Date de dépôt: 22.01.2020
(51) Int. Cl.: F25B 5/04, F25B 6/04, F25B 40/02, F25B 40/00, B60H 1/00

(54) **DISPOSITIF DE GESTION THERMIQUE DE VEHICULE AUTOMOBILE ELECTRIQUE OU HYBRIDE**
THERMISCHES MANAGEMENTGERÄT FÜR ELEKTRISCHE ODER HYBRIDMOTORFAHRZEUGE
THERMAL MANAGEMENT DEVICE OF ELECTRIC OR HYBRID MOTOR VEHICLE

(30) Priorité: 13.02.2019 FR 1901422
(43) Date de publication de la demande: 22.12.2021
(73) Titulaire: Valeo Systemes Thermiques, 78320 Le Mesnil-Saint-Denis (FR)
(72) Inventeur: BENOUALI, Jugurtha, 78322 LE MESNIL SAINT-DENIS CEDEX (FR)
(74) Mandataire: Valeo Systèmes Thermiques
(86) Numéro de dépôt international: PCT/FR2020/050083
(87) Numéro de publication internationale: WO 2020/165511

(56) Documents cités:
- WO-A1-2018/185412
- WO-A2-03/031884
- DE-A1-102016 110 957
- FR-A1- 3 013 265

## Description

L'invention se rapporte à un dispositif de gestion thermique de véhicule automobile électrique ou hybride.

Les véhicules automobiles actuels comportent de plus en plus souvent un dispositif de gestion thermique comportant un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est à dire qu'il peut absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un circuit de climatisation indirect. On entend par indirect ici que le circuit de climatisation comporte deux boucles de circulation de deux fluides distincts (comme par exemple un fluide réfrigérant et de l'eau glycolée) afin d'effectuer les différents échanges de chaleur.

Le circuit de climatisation comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles.

Ce type de circuit de climatisation indirect est, par exemple, connu des documents WO 2018/185412 A1 et FR 3 013 265 A1 au nom du titulaire du brevet. WO 2018/185412 A1 dévoile un dispositif de gestion thermique selon le préambule de la revendication 1.

Un tel circuit de climatisation permet une utilisation selon différents modes de fonctionnement cependant dans le cadre d'un véhicule électrique ou hybride, la gestion thermique d'éléments tels que les batteries et composants électroniques est réalisée par une boucle de gestion thermique secondaire. Cependant cette architecture peut ne pas être suffisante pour assurer l'évacuation de la chaleur accumulée dans le fluide réfrigérant dans certains modes, notamment lorsque les batteries ont besoin d'une grande puissance de refroidissement, par exemple lors d'une charge ou d'une décharge rapide.

Un des buts de la présente invention est donc de remédier au moins partiellement aux inconvénients de l'art antérieur et de proposer un dispositif de gestion thermique amélioré permettant la gestion thermique d'éléments tels que les batteries notamment lorsqu'une forte puissance de refroidissement est nécessaire.

La présente invention concerne donc un dispositif de gestion thermique selon la revendication 1, le dispositif de gestion thermique comportant un circuit de
climatisation indirect pour véhicule automobile comportant :
- une première boucle de fluide réfrigérant dans laquelle est destiné à circuler un fluide réfrigérant, ladite première boucle de fluide réfrigérant comportant dans le sens de circulation du fluide réfrigérant un compresseur, un échangeur de chaleur bifluide, un premier dispositif de détente, un évaporateur, un deuxième dispositif de détente, un évapo/condenseur, et
- une première conduite de contournement de l'évapo/condenseur comportant une première vanne d'arrêt,
- un premier échangeur de chaleur interne, permettant un échange de chaleur entre le fluide réfrigérant à haute pression en sortie de l' échangeur de chaleur bifluide et le fluide réfrigérant à basse pression en sortie du de l'évapo/condenseur ou de la première conduite de contournement,
- un deuxième échangeur de chaleur interne permettant un échange de chaleur entre le fluide réfrigérant à haute pression en sortie du premier échangeur de chaleur interne et le fluide réfrigérant à basse pression circulant dans la première conduite de contournement,
- une deuxième conduite de contournement du premier dispositif de détente et de l'évaporateur, ladite deuxième conduite de contournement comportant un troisième dispositif de détente disposé en amont d'un refroidisseur,
- une branche de dérivation reliant une première bifurcation disposée en aval de l'échangeur de chaleur bifluide, entre ledit échangeur de chaleur bifluide et le premier échangeur de chaleur interne, à une deuxième bifurcation disposée en amont du premier échangeur de chaleur interne, entre ledit premier échangeur de chaleur interne et la première bifurcation, ladite boucle de dérivation comportant un premier radiateur externe,
- une deuxième boucle de fluide caloporteur dans laquelle est destiné à circuler un fluide caloporteur,
l'échangeur de chaleur bifluide étant agencé conjointement d'une part sur la première boucle de fluide réfrigérant en aval du compresseur, entre ledit compresseur et le premier dispositif de détente, et d'autre part sur la deuxième boucle de fluide caloporteur.

Selon l'invention, le circuit de climatisation indirect comporte un dispositif de redirection du fluide réfrigérant en sortie de l'échangeur de chaleur bifluide directement vers le premier échangeur de chaleur interne et/ou vers la branche de dérivation.

Selon l'invention, le dispositif de redirection du fluide réfrigérant en sortie de l'échangeur de chaleur bifluide comporte :
- une première vanne d'arrêt disposée sur la boucle principale en aval de la première bifurcation, entre la première et la deuxième bifurcation, et
- une deuxième vanne d'arrêt disposée sur la branche de dérivation en aval de la première bifurcation, entre la première bifurcation et le premier radiateur externe.

Selon un autre aspect de l'invention, le dispositif de redirection du fluide réfrigérant en sortie de l'échangeur de chaleur bifluide comporte une vanne trois-voies disposée au niveau de la première bifurcation.

Selon un autre aspect de l'invention, la branche de dérivation comporte une vanne anti-retour disposée en aval du premier radiateur radiateur externe, entre ledit premier radiateur externe et la deuxième bifurcation, de sorte à bloquer le fluide réfrigérant en provenance de ladite deuxième bifurcation.

Selon un autre aspect de l'invention, la deuxième boucle de fluide caloporteur comporte :
- l'échangeur de chaleur bifluide,
- une première conduite de circulation de fluide caloporteur comportant un radiateur interne destiné à être traversé par un flux d'air intérieur au véhicule automobile, et reliant un premier point de jonction disposé en aval de l'échangeur de chaleur bifluide et un deuxième point de jonction disposé en amont dudit échangeur de chaleur bifluide,
- une deuxième conduite de circulation de fluide caloporteur comportant un deuxième radiateur externe destiné à être traversé par un flux d'air extérieur au véhicule automobile, et reliant le premier point de jonction disposé en aval de l'échangeur de chaleur bifluide et le deuxième point de jonction disposé en amont dudit échangeur de chaleur bifluide, et
- une pompe disposée en aval ou en amont de l'échangeur de chaleur bifluide, entre le premier point de jonction et le deuxième point de jonction.

Selon un autre aspect de l'invention, le dispositif de gestion thermique est configuré pour fonctionner dans un mode de refroidissement dans lequel le fluide réfrigérant circule dans la première boucle de fluide réfrigérant successivement dans :
- le compresseur où le fluide réfrigérant passe à haute pression,
- l'échangeur de chaleur bifluide,
- le premier radiateur externe via la branche de dérivation,
- le premier échangeur de chaleur interne,
- le deuxième échangeur de chaleur interne,
- une première partie du fluide réfrigérant passe dans la deuxième conduite de contournement, passe dans le troisième dispositif de détente où il subit une perte de pression et passe à basse pression, ledit fluide réfrigérant à basse pression circule ensuite dans le refroidisseur,
- une deuxième partie du fluide réfrigérant passe dans le premier dispositif de détente, où il subit une perte de pression et passe à basse pression, l'évaporateur et dans la première conduite de contournement,
- les deux parties de fluide réfrigérant se rejoignant en amont du premier échangeur de chaleur interne le fluide réfrigérant traverse ensuite au moins le premier échangeur de chaleur interne avant de retourner au compresseur,
et dans lequel, dans la deuxième boucle de fluide caloporteur, le fluide caloporteur en sortie de l'échangeur de chaleur bifluide circule dans le deuxième radiateur externe de la deuxième conduite de circulation.

Selon un autre aspect de l'invention, le dispositif de gestion thermique est configuré pour fonctionner dans un mode de déshumidification dans lequel le fluide réfrigérant circule dans la première boucle de fluide réfrigérant successivement dans :
- le compresseur où le fluide réfrigérant passe à haute pression,
- l'échangeur de chaleur bifluide,
- le premier radiateur externe via la branche de dérivation,
- le premier échangeur de chaleur interne,
- le deuxième échangeur de chaleur interne,
- une première partie du fluide réfrigérant passe dans la deuxième conduite de contournement, passe dans le troisième dispositif de détente où il subit une perte de pression et passe à basse pression, ledit fluide réfrigérant à basse pression circule ensuite dans le refroidisseur,
- une deuxième partie du fluide réfrigérant passe dans le premier dispositif de détente où il subit une perte de pression et passe à basse pression, l'évaporateur, le deuxième dispositif de détente que le fluide réfrigérant traverse sans perte de pression, et l'évapo/condenseur,

les deux parties de fluide réfrigérant se rejoignant en amont du premier échangeur de chaleur interne , le fluide réfrigérant traverse ensuite le premier échangeur de chaleur interne avant de retourner au compresseur,
et dans lequel, dans la deuxième boucle de fluide caloporteur, le fluide caloporteur en sortie de l'échangeur de chaleur bifluide circule dans le radiateur interne et cède de l'énergie calorifique. Selon un autre aspect de l'invention, le dispositif de gestion thermique est configuré pour fonctionner dans un autre mode de déshumidification dans lequel le fluide réfrigérant circule dans la première boucle de fluide réfrigérant successivement dans :
   - le compresseur où le fluide réfrigérant passe à haute pression,
   - l'échangeur de chaleur bifluide,
   - une partie du fluide réfrigérant passant par le premier radiateur externe via la branche de dérivation et un autre partie allant directement vers le premier échangeur de chaleur interne,
   - le premier échangeur de chaleur interne,
   - le deuxième échangeur de chaleur interne,
   - une première partie du fluide réfrigérant passe dans la deuxième conduite de contournement, passe dans le troisième dispositif de détente où il subit une perte de pression et passe à basse pression, ledit fluide réfrigérant à basse pression circule ensuite dans le refroidisseur,
   - une deuxième partie du fluide réfrigérant passe dans le premier dispositif de détente où il subit une perte de pression et passe à basse pression, l'évaporateur, le deuxième dispositif de détente que le fluide réfrigérant traverse sans perte de pression, et l'évapo/condenseur,
les première et deuxièmes parties de fluide réfrigérant se rejoignant en amont du premier échangeur de chaleur interne, le fluide réfrigérant traverse ensuite le premier échangeur de chaleur interne avant de retourner au compresseur,
et dans lequel, dans la deuxième boucle de fluide caloporteur, le fluide caloporteur en sortie de l'échangeur de chaleur bifluide circule dans le radiateur interne et cède de l'énergie calorifique.

D'autres caractéristiques et avantages de l'invention apparaîtront plus clairement à la lecture de la description suivante, donnée à titre d'exemple illustratif et non limitatif, et des dessins annexés parmi lesquels :
- La figure 1 montre une représentation schématique d'un dispositif de gestion thermique selon un premier mode de réalisation de l'invention,
- La figure 2 montre une représentation schématique d'un dispositif de gestion thermique selon un deuxième mode de réalisation de l'invention,
- La figure 3 montre une représentation schématique d'un dispositif de gestion thermique selon un troisième mode de réalisation de l'invention,
- La figure 4 montre une représentation schématique d'un dispositif de gestion thermique selon un quatrième mode de réalisation de l'invention,
- La figure 5 montre un dispositif de détente selon un mode de réalisation alternatif de l'invention,
- La figure 6 montre une représentation schématique de la deuxième boucle de fluide caloporteur du dispositif de gestion thermique des figures 1 à 4, selon un mode de réalisation alternatif,
- La figure 7a montre une représentation schématique du dispositif de gestion thermique de la figure 2 selon un premier mode de refroidissement,
- La figure 7b montre une représentation schématique du dispositif de gestion thermique de la figure 2 selon un deuxième mode de refroidissement,
- La figure 8a montre une représentation schématique du dispositif de gestion thermique de la figure 2 selon un troisième mode de refroidissement,
- La figure 8b montre une représentation schématique du dispositif de gestion thermique de la figure 2 selon un quatrième mode de refroidissement,
- La figure 9a montre une représentation schématique du dispositif de gestion thermique de la figure 2 selon un cinquième mode de refroidissement,
- La figure 9b montre une représentation schématique du dispositif de gestion thermique de la figure 2 selon un sixième mode de refroidissement,
- La figure 10a montre une représentation schématique du dispositif de gestion thermique de la figure 2 selon un premier mode de déshumidification,
- La figure 10b montre une représentation schématique du dispositif de gestion thermique de la figure 2 selon un deuxième mode de déshumidification,
- La figure 10c montre une représentation schématique du dispositif de gestion thermique de la figure 2 selon un troisième mode de déshumidification,
- La figure 11a montre une représentation schématique du dispositif de gestion thermique de la figure 2 selon un quatrième mode de déshumidification,
- La figure 11b montre une représentation schématique du dispositif de gestion thermique de la figure 2 selon un cinquième mode de déshumidification,
- La figure 11c montre une représentation schématique du dispositif de gestion thermique de la figure 2 selon un sixième mode de déshumidification.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations. Cependant, la portée de la présente invention est définie par les revendications annexées.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

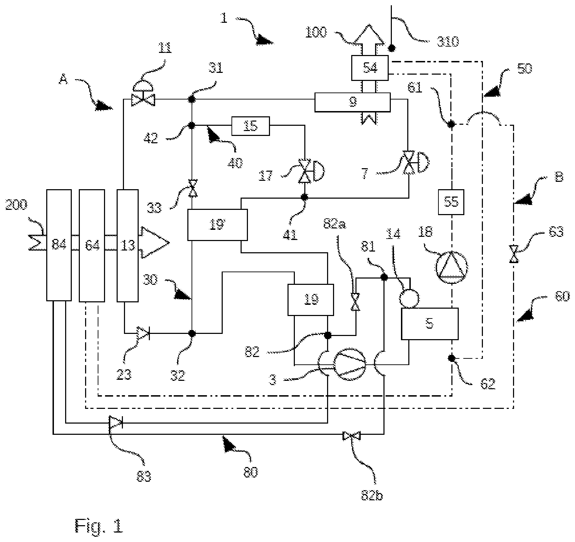

La figure 1 montre un dispositif de gestion thermique comportant circuit de climatisation indirect 1 pour véhicule automobile. Ce circuit de climatisation indirect 1 comporte notamment :
- une première boucle de fluide réfrigérant A dans laquelle est destiné à circuler un fluide réfrigérant,
- une deuxième boucle de fluide caloporteur B dans laquelle est destiné à circuler un fluide caloporteur, et
- un échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A comporte plus particulièrement dans le sens de circulation du fluide réfrigérant :
- un compresseur 3,
- l'échangeur de chaleur bifluide 5, disposé en aval dudit compresseur 3,
- un premier dispositif de détente 7,
- un évaporateur 9 destiné à être traversé par un flux d'air intérieur 100 au véhicule automobile,
- un deuxième dispositif de détente 11,
- un évapo/condenseur 13 destiné à être traversé par un flux d'air extérieur 200 au véhicule automobile, et
- une première conduite de contournement 30 de l'évapo/condenseur 13.

Par « radiateur », on entend ici un échangeur de chaleur dont la fonction principale est de dissiper de l'énergie calorifique, ici dans un flux d'air interne 100 ou externe 200.

Par « évaporateur », on entend ici un échangeur de chaleur dont la fonction principale est d'absorber de l'énergie calorifique, ici dans un flux d'air interne 100. Au sein dudit « évaporateur », le fluide réfrigérant passe généralement d'une phase liquide à une phase gazeuse ou diphasique.

Par « échangeur de chaleur bifluide », on entend ici un échangeur de chaleur à l'intérieur duquel le fluide réfrigérant de la première boucle de fluide réfrigérant A et le fluide caloporteur de la deuxième boucle de fluide caloporteur B circulent simultanément. La principale fonction de cet échangeur de chaleur bifluide est ici de dissiper de l'énergie calorifique, ici en la cédant au fluide caloporteur de la deuxième boucle B. Au sein dudit échangeur de chaleur bifluide, le fluide réfrigérant passe d'une phase gazeuse à une phase liquide.

Par « évapo/condenseur » on entend ici un échangeur de chaleur pouvant aussi bien dissiper qu'absorber de l'énergie calorifique, ici d'un flux d'air externe 200.

Par flux d'air intérieur 100, on entend ici un flux d'air destiné à l'habitacle du véhicule automobile. L'évaporateur 9 peut ainsi être disposé dans un dispositif de chauffage, ventilation et climatisation. Par flux d'air extérieur 200, on entend un flux d'air qui provient de l'extérieur du véhicule automobile. L'évapo/condenseur 13 peut ainsi être disposé en face avant du véhicule automobile.

La première conduite de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval de l'évaporateur 9, entre ledit évaporateur 9 et l'évapo/condenseur 13. Plus particulièrement, et comme illustré sur la figure 1, le premier point de raccordement 31 est disposé entre l'évaporateur 9 et le deuxième dispositif de détente 11. Il est cependant tout à fait possible d'imaginer que le premier point de raccordement 31 soit disposé entre le deuxième dispositif de détente 11 et l'évapo/condenseur 13 du moment que le fluide réfrigérant a la possibilité de contourner ledit deuxième dispositif de détente 11 ou de le traverser sans subir de perte de pression.

Le deuxième point de raccordement 32 est quant à lui de préférence disposé en aval de l'évapo/condenseur 13, entre ledit échangeur de chaleur 13 et le compresseur 3.

Afin de contrôler le passage du fluide réfrigérant au sein de la première conduite de contournement 30 ou non, cette dernière comporte une première vanne d'arrêt 33. Pour que le fluide réfrigérant ne traverse pas l'évapo/condenseur 13, le deuxième dispositif de détente 11 peut notamment comporter une fonction d'arrêt, c'est-à-dire qu'il est apte à bloquer le flux de fluide réfrigérant lorsqu'il est fermé. Une alternative peut être de disposer une vanne d'arrêt entre le deuxième dispositif de détente 11 et le premier point de raccordement 31.

Une autre alternative (non représentée) peut également être de disposer une vanne trois-voies au niveau du premier point de raccordement 31.

La première boucle de fluide réfrigérant A peut également comporter un clapet antiretour 23 disposé en aval de l'évapo/condenseur 13, entre ledit évapo/condenseur 13 et le deuxième point de raccordement 32 afin d'éviter que du fluide réfrigérant issu de la première conduite de contournement 30 ne reflux vers l'évapo/condenseur 13.

Par vanne d'arrêt, clapet antiretour, vanne trois-voies ou dispositif de détente avec fonction d'arrêt, on entend ici des éléments mécaniques ou électromécaniques pouvant être auto-régulés ou pilotés par une unité de commande électronique embarquée dans le véhicule automobile.

La première boucle de fluide réfrigérant A comporte également un premier échangeur de chaleur interne 19 (IHX pour « internal heat exchanger ») permettant un échange de chaleur entre le fluide réfrigérant à haute pression en sortie de l'échangeur de chaleur bifluide 5 et le fluide réfrigérant à basse pression en sortie de l'évapo/condenseur 13 ou de la première conduite de contournement 30. Ce premier échangeur de chaleur interne 19 comporte notamment une entrée et une sortie de fluide réfrigérant à basse pression en provenance du deuxième point de raccordement 32, ainsi qu'une entrée et une sortie de fluide réfrigérant à haute pression en provenance de l'échangeur de chaleur bifluide 5.

Par fluide réfrigérant à haute pression, on entend par là un fluide réfrigérant ayant subi une augmentation de pression au niveau du compresseur 3 et n'ayant pas encore subi de perte de pression du fait d'un des dispositifs de détente. Par fluide réfrigérant à basse pression, on entend par là un fluide réfrigérant ayant subi une perte de pression et à une pression proche de celle à l'entrée du compresseur 3.

La première boucle de fluide réfrigérant A comporte également un deuxième échangeur de chaleur interne 19' (IHX pour « internal heat exchanger ») permettant un échange de chaleur entre le fluide réfrigérant à haute pression en sortie du premier échangeur de chaleur interne 19 et le fluide réfrigérant à basse pression circulant dans la première conduite de contournement 30. Ce deuxième échangeur de chaleur interne 19' comporte notamment une entrée et une sortie de fluide réfrigérant à basse pression en provenance du premier point de raccordement 31, ainsi qu'une entrée et une sortie de fluide réfrigérant à haute pression en provenance du premier échangeur de chaleur interne 19. Comme illustré sur la figure 1, le deuxième échangeur de chaleur interne 19' peut être disposé en aval de la première vanne d'arrêt 33.

Au moins un des premier 19 ou deuxième 19' échangeurs de chaleur interne peut être un échangeur de chaleur coaxial, c'est à dire comportant deux tubes coaxiaux et entre lesquels s'effectuent les échanges de chaleur.

De préférence, le premier échangeur de chaleur interne 19 peut être un échangeur de chaleur interne coaxial d'une longueur comprise entre 50 et 120mm alors que le deuxième échangeur de chaleur interne 19' peut être un échangeur de chaleur interne coaxial d'une longueur comprise entre 200 et 700mm.

La première boucle de fluide réfrigérant A peut également comporter une bouteille déshydratante 14 disposée en aval de l'échangeur de chaleur bifluide 5, plus précisément entre ledit échangeur de chaleur bifluide 5 et le premier échangeur de chaleur interne 19. Une telle bouteille déshydratante disposée sur le côté haute pression du circuit de climatisation, c'est à dire en aval de l'échangeur de chaleur bifluide 5 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est à dire en amont du compresseur 3, notamment en amont du premier échangeur de chaleur interne 19.

Les premier 7 et deuxième 11 dispositifs de détente peuvent être des détendeurs électroniques, c'est à dire dont la pression du fluide réfrigérant en sortie est contrôlée par un actionneur qui fixe la section d'ouverture du dispositif de détente, fixant ainsi la pression du fluide en sortie. Un tel détendeur électronique est notamment apte à laisser passer le fluide réfrigérant sans perte de pression lorsque ledit dispositif de détente est ouvert complètement.

Selon un mode de réalisation préféré, le premier dispositif de détente 7 est un détendeur électronique pilotable par une unité de contrôle intégrée au véhicule et le deuxième dispositif de détente 11 est un détendeur thermostatique.

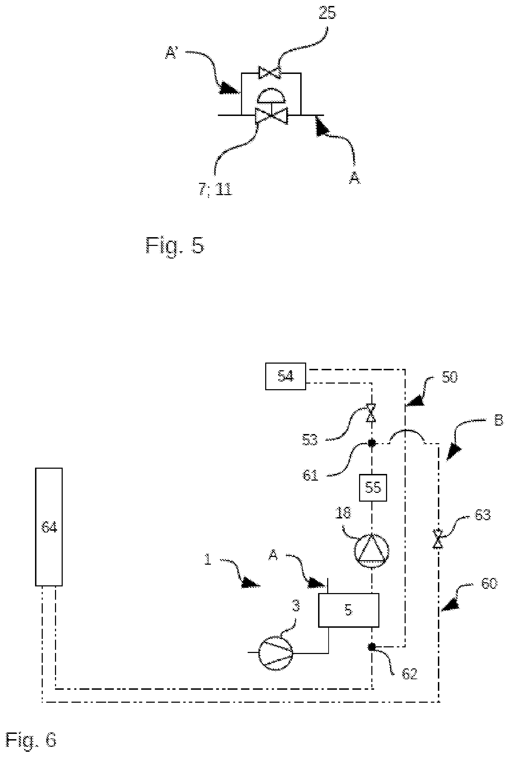

Le deuxième dispositif de détente 11 peut être notamment un détendeur thermostatique intégrant une fonction d'arrêt. Dans ce cas, lesdits premier 7 et deuxième 11 dispositifs de détente peuvent être contournés par une conduite de dérivation A', comportant notamment une vanne d'arrêt 25, comme illustré sur la figure 5. Cette conduite de dérivation A' permet au fluide réfrigérant de contourner lesdits premier 7 et deuxième 11 dispositifs de détente sans qu'il subisse une perte de pression. De préférence, au moins le deuxième dispositif de détente 11 est un détendeur thermostatique comportant une conduite de dérivation A'. Le premier dispositif de détente 7 peut également comporter une fonction d'arrêt ou alors comporter une vanne d'arrêt en aval afin de bloquer ou non le passage du fluide réfrigérant.

La première boucle de fluide réfrigérant A comporte également une deuxième conduite de contournement 40 du premier dispositif de détente 7 et de l'évaporateur 9. Cette deuxième conduite de contournement 40 comporte un troisième dispositif de détente 17 disposé en amont d'un refroidisseur 15. Ce refroidisseur 15 peut être agencé conjointement sur une boucle de gestion thermique secondaire. La boucle de gestion thermique secondaire peut plus particulièrement être une boucle dans laquelle circule un fluide caloporteur et reliée à des échangeurs de chaleur ou plaques froides au niveau de batteries et/ou d'éléments électroniques. Le refroidisseur 15 peut également être un échangeur de chaleur directement au contact des éléments à refroidir tels que les batteries.

Le troisième dispositif de détente 17 peut également comporter une fonction d'arrêt afin de permettre ou non au fluide réfrigérant de traverser la deuxième conduite de contournement 40. Une alternative est de disposer une vanne d'arrêt sur la deuxième conduite de contournement 40, en amont du troisième dispositif de détente 17.

La deuxième conduite de contournement 40 est connectée d'une part en amont du premier dispositif de détente 7. Cette connexion est réalisée au niveau d'un troisième point de raccordement 41 disposé en amont du premier dispositif de détente 7, entre le deuxième échangeur de chaleur interne 19' et ledit premier dispositif de détente 7.

Selon un premier mode de réalisation illustré à la figure 1, la deuxième conduite de contournement 40 est connectée d'autre part sur la première conduite de contournement 30, en amont de la première vanne d'arrêt 33 et du deuxième échangeur de chaleur interne 19'. Cette connexion est réalisée au niveau d'un quatrième point de raccordement 42 disposé entre le premier point de raccordement 31 et la première vanne d'arrêt 33 lorsque celle-ci est disposée en amont du deuxième échangeur de chaleur interne 19' comme sur la figure 1.

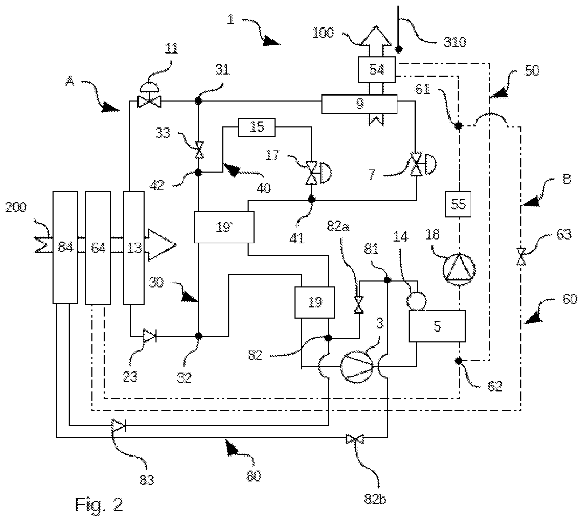

Selon un deuxième mode de réalisation illustré à la figure 2, la deuxième conduite de contournement 40 est connectée d'autre part sur la première conduite de contournement 30, en amont du deuxième échangeur de chaleur interne 19' et en aval de la première vanne d'arrêt 33. Le quatrième point de raccordement 42 est alors disposé entre la première vanne d'arrêt 33 et le deuxième échangeur de chaleur interne 19' lorsque la première vanne d'arrêt 33 est disposée en amont du deuxième échangeur de chaleur interne 19' comme sur la figure 2.

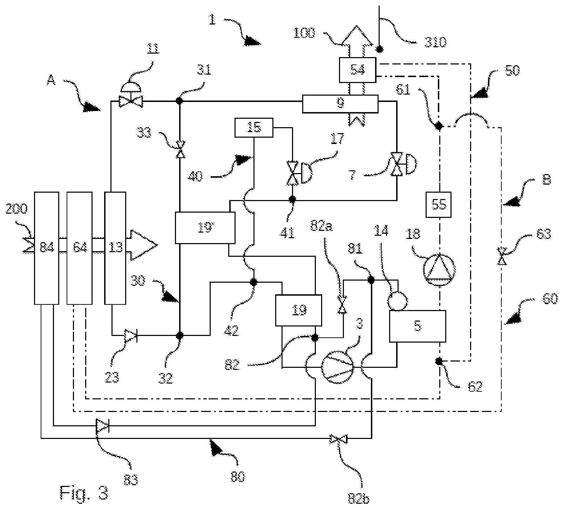

La figure 3 montre un troisième mode de réalisation où la deuxième conduite de contournement 40 est connectée d'une part en amont du premier dispositif de détente 7 et d'autre part en aval du deuxième dispositif de détente 19', entre ledit deuxième dispositif de détente 19' et le premier échangeur de chaleur interne 19. Le troisième point de raccordement 41 est ainsi également disposé en amont du premier dispositif de détente 7, entre le deuxième échangeur de chaleur interne 19' et ledit premier dispositif de détente 7.

Sur l'exemple de la figure 3, le quatrième point de raccordement 42 est disposé en aval de la première conduite de contournement 30, entre le deuxième point de raccordement 32 et le premier échangeur de chaleur interne 19. Cependant il est également tout à fait possible d'imaginer que le quatrième point de raccordement 42 soit disposé sur la première conduite de contournement 30, en aval de la première vanne d'arrêt 33 et du deuxième échangeur de chaleur interne 19'.

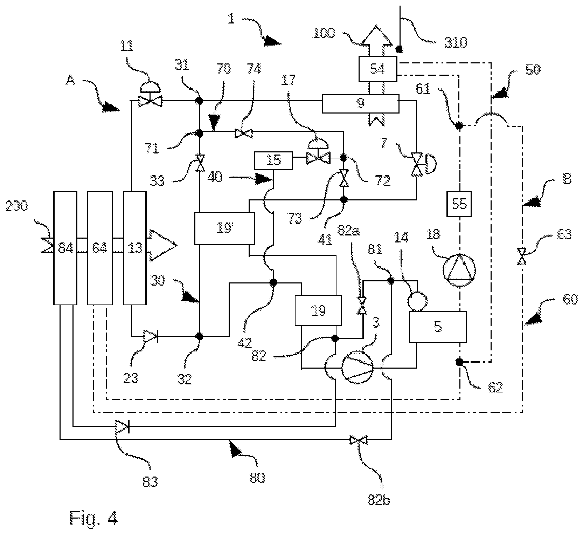

La figure 4 montre un quatrième mode de réalisation identique à celui de la figure 3 à la différence que la première boucle de fluide réfrigérant A comporte une conduite de dérivation 70 connectée d'une part sur la première conduite de contournement 30, en amont de la première vanne d'arrêt 33 et du deuxième échangeur de chaleur interne 19'. La connexion est réalisée par un cinquième point de raccordement 71 disposé entre le premier point de raccordement 31 et la première vanne d'arrêt 33 lorsque celle-ci est disposée en amont du deuxième échangeur de chaleur interne 19', comme illustré sur la figure 4.

Cette conduite de dérivation 70 est connectée d'autre part sur la deuxième conduite de contournement 40, en amont du troisième dispositif de détente 17 entre ledit troisième dispositif de détente 17 et une deuxième vanne d'arrêt 73. Cette deuxième vanne d'arrêt 73 est disposée entre le troisième point de raccordement 41 et le troisième dispositif de détente 17. La connexion de la conduite de dérivation 70 est alors réalisée au niveau d'un cinquième point de raccordement 72 disposé en aval de la deuxième vanne d'arrêt 73. Cette conduite de dérivation 70 comporte une troisième vanne d'arrêt 74 afin de laisser passer ou non le fluide réfrigérant en son sein.

La première boucle de fluide réfrigérant A comporte également une branche de dérivation 80 reliant une première bifurcation 81 à une deuxième bifurcation 82. La première bifurcation 81 est disposée en aval de l'échangeur de chaleur bifluide, entre ledit échangeur de chaleur bifluide 5 et le premier échangeur de chaleur interne 19. La deuxième bifurcation 82 est quant à elle disposée en amont du premier échangeur de chaleur interne 19, entre ledit premier échangeur de chaleur interne 19 et la première bifurcation 81.

La boucle de dérivation 80 comporte un premier radiateur externe 84. Ce premier radiateur externe 84 est destiné à être traversé par le flux d'air externe 200. Le premier radiateur externe 84 peut notamment être disposé en face avant du véhicule automobile, en amont de l'évapo/condenseur 13. Le premier radiateur externe 84 a également comme fonction de faire subir au fluide réfrigérant un sous-refroidissement. Le premier radiateur 84 est ainsi également connu parfois sous la dénomination de sous-refroidisseur.

Le circuit de climatisation indirect 1 et plus précisément la première boucle de fluide réfrigérant A comporte un dispositif de redirection du fluide réfrigérant en sortie de l'échangeur de chaleur bifluide 5 directement vers le premier échangeur de chaleur interne 19 et/ou vers la branche de dérivation 80.

Selon une première variante illustrée aux figures 1 à 4, le dispositif de redirection du fluide réfrigérant en sortie de l'échangeur de chaleur bifluide 5 peut comporter :
- une première vanne d'arrêt 82a disposée sur la boucle principale A en aval de la première bifurcation 81, entre la première 81 et la deuxième 82 bifurcation, et
- une deuxième vanne d'arrêt 82b disposée sur la branche de dérivation 80 en aval de la première bifurcation 81, entre la première bifurcation 81 et le premier radiateur externe 84.

Selon une deuxième variante non représentée, le dispositif de redirection du fluide réfrigérant en sortie de l'échangeur de chaleur bifluide 5 comporte une vanne trois-voies disposée au niveau de la première bifurcation 81.

La branche de dérivation 80 peut également comporter une vanne anti-retour 83 disposée en aval du premier radiateur externe 84, entre ledit premier radiateur externe 84 et la deuxième bifurcation 82. Cette vanne anti-retour 83 est positionnée de sorte à bloquer le fluide réfrigérant en provenance de la deuxième bifurcation 82.

La deuxième boucle de fluide caloporteur B peut comporter quant à elle :
- l'échangeur de chaleur bifluide 5,
- une première conduite de circulation 50 de fluide caloporteur comportant un radiateur interne 54 destiné à être traversé par un flux d'air intérieur 100 au véhicule automobile, et reliant un premier point de jonction 61 disposé en aval de l'échangeur de chaleur bifluide 5 et un deuxième point de jonction 62 disposé en amont dudit échangeur de chaleur bifluide 5,
- une deuxième conduite de circulation 60 de fluide caloporteur comportant un deuxième radiateur externe 64 destiné à être traversé par un flux d'air extérieur 200 au véhicule automobile, et reliant le premier point de jonction 61 disposé en aval de l'échangeur de chaleur bifluide 5 et le deuxième point de jonction 62 disposé en amont dudit l'échangeur de chaleur bifluide 5, et
- une pompe 18 disposée en aval ou en amont de l'échangeur de chaleur bifluide 5, entre le premier point de jonction 61 et le deuxième point de jonction 62.

Le radiateur interne 54 peut ainsi être disposé dans le dispositif de chauffage, ventilation et climatisation. De préférence, le radiateur 54 est disposé en aval de l'évaporateur dans le sens de circulation du flux d'air interne 100. Le deuxième radiateur externe 64 peut être quant à lui disposé en face avant du véhicule automobile, par exemple en amont de l'évapo/condenseur 13 dans le sens de circulation du flux d'air externe 200, plus précisément entre le premier radiateur externe 84 et l'évapo/condenseur 13.

Le circuit de climatisation inversible indirect 1 comporte au sein de la deuxième boucle de fluide caloporteur B un dispositif de redirection du fluide caloporteur en provenance de l'échangeur de chaleur bifluide 5 vers la première conduite de circulation 50 et/ou vers la deuxième conduite de circulation 60.

Comme illustré sur les figures 1 à 4, ledit dispositif de redirection du fluide caloporteur en provenance de l'échangeur de chaleur bifluide 5 peut notamment comporter une quatrième vanne d'arrêt 63 disposée sur la deuxième conduite de circulation 60 afin de bloquer ou non le fluide caloporteur et de l'empêcher de circuler dans ladite deuxième conduite de circulation 60.

Le dispositif de gestion thermique peut également comporter, au sein du dispositif de chauffage, ventilation et climatisation, un volet d'obstruction 310 du flux d'air intérieur 100 traversant le radiateur interne 54.

Ce mode de réalisation permet notamment de limiter le nombre de vannes sur la deuxième boucle de fluide caloporteur B et permet ainsi de limiter les coûts de production.

Selon un mode de réalisation alternatif illustré à la figure 6, le dispositif de redirection du fluide caloporteur en provenance de l'échangeur de chaleur bifluide 5 peut notamment comporter :
- une quatrième vanne d'arrêt 63 disposée sur la deuxième conduite de circulation 60 afin de bloquer ou non le fluide caloporteur et de l'empêcher de circuler dans ladite deuxième conduite de circulation 60, et
- une cinquième vanne d'arrêt 53 disposée sur la première conduite de circulation 50 afin de bloquer ou non le fluide caloporteur et l'empêcher de circuler dans ladite première conduite de circulation 50.

La deuxième boucle de fluide caloporteur B peut également comporter un élément électrique chauffant 55 du fluide caloporteur. Ledit élément électrique chauffant 55 est notamment disposé, dans le sens de circulation du fluide caloporteur, en aval de l'échangeur de chaleur bifluide 5, entre ledit échangeur de chaleur bifluide 5 et le premier point de jonction 61.

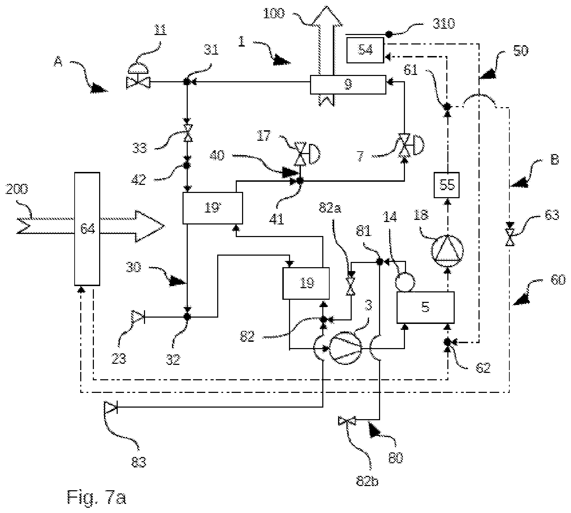

La présente invention concerne également un ensemble de procédés de fonctionnement du dispositif de gestion thermique selon différents modes de fonctionnement illustrés aux figures 7a à 11c. Sur ces figures 7a, à 11c, seuls les éléments dans lesquels le fluide réfrigérant et/ou le fluide caloporteur circulent sont représentés. Le sens de circulation du fluide réfrigérant et/ou du fluide caloporteur est représenté par des flèches. Les exemples illustrés aux figures 7a à 11c montrent tous la première boucle de fluide réfrigérant A et plus particulièrement la connexion de la deuxième conduite de contournement 40 selon le mode de réalisation de la figure 2. Il est cependant tout à fait possible d'imaginer les modes de fonctionnement décrit ci-dessous pour les modes de réalisation des figures 1, 3 et 4.

### 1. premier mode de refroidissement :

La figure 7a montre un premier mode de refroidissement dans lequel, au niveau de la première boucle de fluide réfrigérant A, le fluide réfrigérant circule successivement dans :
- le compresseur 3 où le fluide réfrigérant passe à haute pression,
- l'échangeur de chaleur bifluide 5 au niveau duquel le fluide réfrigérant cède de l'énergie calorifique au fluide caloporteur de la deuxième boucle de fluide caloporteur B,
- le premier échangeur de chaleur interne 19,
- le deuxième échangeur de chaleur interne 19',
- le premier dispositif de détente 7 où le fluide réfrigérant subit une perte de pression et passe à basse pression,
- l'évaporateur 9 au niveau duquel le fluide réfrigérant capte de l'énergie calorifique du flux d'air interne 100, refroidissant ce dernier,
- la première conduite de contournement 30 où le fluide réfrigérant passe dans le deuxième échangeur de chaleur interne 19', et
- le premier échangeur de chaleur interne 19 avant de retourner au compresseur 3.

Au niveau de la deuxième boucle de fluide caloporteur B, le fluide caloporteur en sortie de l'échangeur de chaleur bifluide 5 circule dans le deuxième radiateur externe 64 de la deuxième conduite de circulation 60.

Comme illustré dans l'exemple de la figure 7a, une portion du fluide caloporteur en sortie de l'échangeur de chaleur bifluide 5 circule dans le radiateur interne 54 de la première conduite de circulation 50 et une autre portion du fluide caloporteur en sortie de l'échangeur de chaleur bifluide 5 circule dans le deuxième radiateur externe 64 de la deuxième conduite de circulation 60. Le volet d'obstruction 310 est fermé de sorte à empêcher le flux d'air intérieur 100 de circuler dans le radiateur interne 54.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse l'échangeur de chaleur bifluide 5 et subit une perte d'énergie calorifique du fait de son passage en phase liquide et du transfert de cette énergie calorifique vers le fluide caloporteur de la deuxième boucle de fluide caloporteur B. Le fluide réfrigérant à haute pression perd alors de l'énergie calorifique tout en restant à une pression constante.

Le fluide réfrigérant à haute pression ne passe pas dans la branche de dérivation 80 du fait que le dispositif de redirection du fluide réfrigérant en sortie de l'échangeur de chaleur bifluide 5 redirige le fluide réfrigérant directement vers le premier échangeur de chaleur 19. Pour cela, dans l'exemple illustré à la figure 7a, la première vanne d'arrêt 82a dudit dispositif est ouverte et la deuxième vanne d'arrêt 82b dudit dispositif est fermée.

Le fluide réfrigérant à haute pression passe ensuite dans le premier échangeur de chaleur interne 19 où il perd de l'énergie calorifique. Cette énergie calorifique est transférée au fluide réfrigérant à basse pression issu de la première conduite de contournement 30.

Le fluide réfrigérant à haute pression passe ensuite dans le deuxième échangeur de chaleur interne 19' où il perd de nouveau de l'énergie calorifique. Cette énergie calorifique est transférée au fluide réfrigérant à basse pression traversant la première conduite de contournement 30.

En sortie du deuxième échangeur de chaleur interne 19', le fluide réfrigérant ne circule pas dans la deuxième conduite de contournement 40 du fait que le troisième dispositif de détente 17 est fermé.

Le fluide réfrigérant traverse ensuite le premier dispositif de détente 7 au niveau duquel il subit une perte de pression et passe à basse pression.

Le fluide réfrigérant à basse pression passe ensuite dans l'évaporateur 9 où il gagne de l'énergie calorifique en refroidissant le flux d'air intérieur 100. Le fluide réfrigérant repasse à l'état gazeux. A la sortie de l'évaporateur 9, le fluide réfrigérant est redirigé vers la première conduite de contournement 30. Afin que le fluide réfrigérant ne passe pas dans l'évapo/condenseur 13, le deuxième dispositif de détente 11 est fermé.

Le fluide réfrigérant à basse pression passe ensuite dans le deuxième échangeur de chaleur interne 19' où il gagne de l'énergie calorifique issue du fluide réfrigérant à haute pression traversant le deuxième échangeur de chaleur interne 19'.

Le fluide réfrigérant à basse pression passe ensuite dans le premier échangeur de chaleur interne 19 où il gagne de nouveau de l'énergie calorifique issue du fluide réfrigérant à haute pression traversant le premier échangeur de chaleur interne 19. Le fluide réfrigérant à basse pression retourne ensuite vers le compresseur 3.

Ce premier mode de refroidissement est utile pour refroidir le flux d'air intérieur 100.

Dans ce premier mode de refroidissement, les deux échangeurs de chaleur interne 19 et 19' sont actifs et leurs effets s'additionnent. L'utilisation des échangeurs de chaleur interne 19 et 19' l'un après l'autre, permet de diminuer l'enthalpie du fluide réfrigérant en entrée du premier dispositif de détente 7. Le fluide réfrigérant à l'état liquide en sortie de l'échangeur de chaleur bifluide 5 est refroidi par le fluide réfrigérant à l'état gazeux et à basse pression sortant de l'évaporateur 9. La différence d'enthalpie aux bornes de l'évaporateur 9 augmente sensiblement ce qui permet à la fois, une augmentation de la puissance frigorifique disponible au niveau dudit évaporateur 9 qui refroidit le flux d'air 100 et cela entraîne donc une amélioration du coefficient de performance (ou COP pour « coefficient of performance »).

De plus, l'ajout d'énergie calorifique au fluide réfrigérant à basse pression au niveau des premier 19 et deuxième 19' échangeurs de chaleur interne permet de limiter la proportion de fluide réfrigérant en phase liquide avant son entrée dans le compresseur 3, notamment lorsque le circuit de climatisation 1 comporte une bouteille déshydratante 14 disposée en aval de l'échangeur de chaleur bifluide 5.

Au niveau de la deuxième boucle de fluide caloporteur B, le fluide caloporteur gagne de l'énergie calorifique issue du fluide réfrigérant au niveau de l'échangeur de chaleur bifluide 5.

Comme illustré sur la figure 7a, une portion du fluide caloporteur circule dans la première conduite de circulation 50 et traverse le radiateur interne 54. Le fluide caloporteur ne perd cependant pas d'énergie calorifique car le volet d'obstruction 310 est refermé et bloque le flux d'air intérieur 100 de sorte qu'il ne traverse pas le radiateur interne 54.

Une autre portion du fluide caloporteur circule dans la deuxième conduite de circulation 60 et traverse le deuxième radiateur externe 64. Le fluide caloporteur perd de l'énergie calorifique au niveau dudit deuxième radiateur externe 64 en la relâchant dans le flux d'air extérieur 200. La quatrième vanne d'arrêt 63 est ouverte pour permettre le passage du fluide caloporteur.

Une solution alternative (non représentée) pour que le fluide caloporteur n'échange pas avec le flux d'air intérieur 100 au niveau du radiateur interne 54, est de munir, comme sur la figure 6, la première conduite de circulation 50 de la cinquième vanne d'arrêt 53 et de la fermer de sorte à empêcher le fluide caloporteur de circuler dans ladite première conduite de circulation 50.

### 2. deuxième mode de refroidissement :

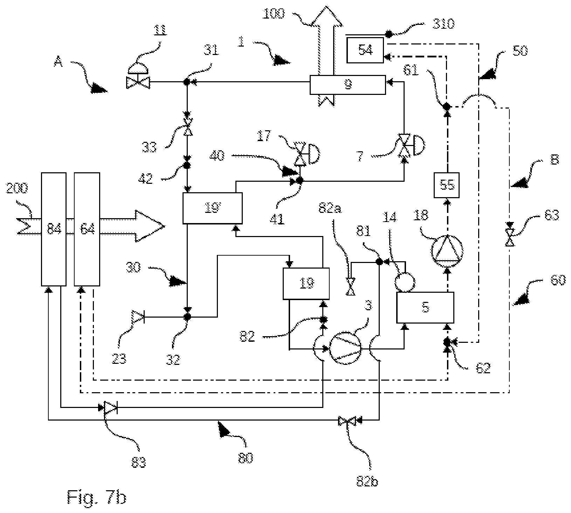

La figure 7b montre un deuxième mode de refroidissement. Ce deuxième mode de refroidissement est identique au premier mode de refroidissement de la figure 7a, à la différence qu'en sortie de l'échangeur de chaleur bifluide 5, le fluide réfrigérant passe par la branche de dérivation 80 et le premier radiateur externe 84. Pour cela, le dispositif de redirection du fluide réfrigérant en sortie de l'échangeur de chaleur bifluide 5 redirige le fluide réfrigérant directement vers le premier radiateur externe 84 et non pas vers le premier échangeur de chaleur interne 19. Pour cela, dans l'exemple illustré à la figure 7b, la première vanne d'arrêt 82a dudit dispositif est fermée et la deuxième vanne d'arrêt 82b dudit dispositif est ouverte.

Au niveau du premier radiateur externe 84, le fluide réfrigérant cède de l'énergie calorifique au flux d'air externe 200. Cela permet d'évacuer plus de chaleur qu'uniquement au moyen du troisième radiateur 64. Cela est particulièrement utile lorsque les besoins en refroidissement via l'évaporateur 9 sont élevés. Le premier radiateur externe 84 permet également de disposer d'une surface d'échange additionnelle avec le flux d'air externe 200. Cela permet de réduite la température (et donc l'enthalpie) du fluide réfrigérant avant son entrée dans le premier échangeur de chaleur interne 19 afin d'améliorer les performances en refroidissement du système.

### 3, troisième mode de refroidissement :

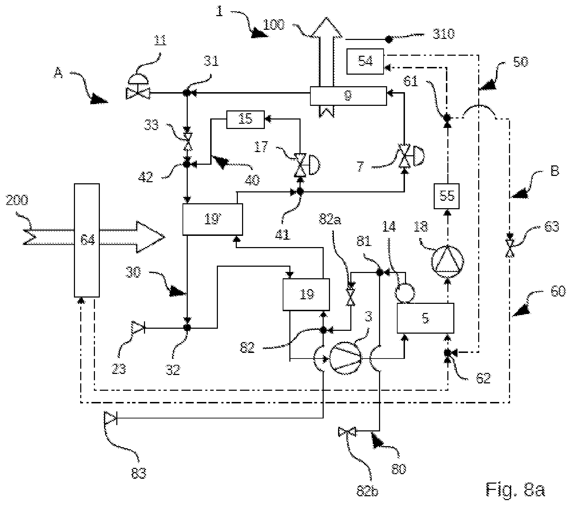

La figure 8a montre un troisième mode de refroidissement dans lequel, au niveau de la première boucle de fluide réfrigérant A, le fluide réfrigérant circule successivement dans :
- le compresseur 3 où le fluide réfrigérant passe à haute pression,
- l'échangeur de chaleur bifluide 5, au niveau duquel le fluide réfrigérant cède de l'énergie calorifique au fluide caloporteur de la deuxième boucle de fluide caloporteur B,
- le premier échangeur de chaleur interne 19,
- le deuxième échangeur de chaleur interne 19',
- une première partie du le fluide réfrigérant passe dans la deuxième conduite de contournement 40, passe dans le troisième dispositif de détente 17 où il subit une perte de pression et passe à basse pression, ledit fluide réfrigérant à basse pression circule ensuite dans le refroidisseur 15,
- une deuxième partie du fluide réfrigérant passe dans le premier dispositif de détente 7, où il subit une perte de pression et passe à basse pression, l'évaporateur 9, au niveau duquel il capte de l'énergie calorifique du flux d'air interne 100 refroidissant ce dernier, et dans la première conduite de contournement 30.

Les deux parties de fluide réfrigérant se rejoignent au niveau de la première conduite de contournement 30 en amont du deuxième échangeur de chaleur interne 19' dans l'exemple de la figure 8a. Le fluide réfrigérant passe ensuite dans le deuxième échangeur de chaleur interne 19', et le premier échangeur de chaleur interne 19 avant de retourner au compresseur 3.

Quel que soit le mode de réalisation de la connexion de la deuxième conduite de contournement 40 illustré par les figures 1 à 4, les deux parties du fluide réfrigérant se rejoignent en amont du premier échangeur de chaleur interne 19. Le fluide réfrigérant passe ainsi au moins par le premier échangeur de chaleur interne 19 avant de rejoindre le compresseur 3.

Au niveau de la deuxième boucle de fluide caloporteur B, le fluide caloporteur en sortie de l'échangeur de chaleur bifluide 5 circule dans le deuxième radiateur externe 64 de la deuxième conduite de circulation 50.

Comme illustré par la figure 8a, une portion du fluide caloporteur en sortie de l'échangeur de chaleur bifluide 5 circule dans le radiateur interne 54 de la première conduite de circulation 50 et une autre portion du fluide caloporteur en sortie de l'échangeur de chaleur bifluide 5 circule dans le deuxième radiateur externe 64 de la deuxième conduite de circulation 50. Le volet d'obstruction 310 est fermé de sorte à empêcher le flux d'air intérieur 100 de circuler dans le radiateur interne 54.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse l'échangeur de chaleur bifluide 5 et subit une perte d'énergie calorifique du fait de son passage en phase liquide et du transfert de cette énergie calorifique vers le fluide caloporteur de la deuxième boucle de fluide caloporteur B. Le fluide réfrigérant à haute pression perd alors de l'énergie calorifique tout en restant à une pression constante.

Le fluide réfrigérant à haute pression ne passe pas dans la branche de dérivation 80 du fait que le dispositif de redirection du fluide réfrigérant en sortie de l'échangeur de chaleur bifluide 5 redirige le fluide réfrigérant directement vers le premier échangeur de chaleur 19. Pour cela, dans l'exemple illustré à la figure 7a, la première vanne d'arrêt 82a dudit dispositif est ouverte et la deuxième vanne d'arrêt 82b dudit dispositif est fermée.

Le fluide réfrigérant à haute pression passe ensuite dans le premier échangeur de chaleur interne 19 où il perd de l'énergie calorifique. Cette énergie calorifique est transférée au fluide réfrigérant à basse pression issu de la première conduite de contournement 30.

Le fluide réfrigérant à haute pression passe ensuite dans le deuxième échangeur de chaleur interne 19' où il perd de nouveau de l'énergie calorifique. Cette énergie calorifique est transférée au fluide réfrigérant à basse pression traversant la première conduite de contournement 30.

En sortie du deuxième échangeur de chaleur interne 19', une première partie du fluide réfrigérant passe dans la deuxième conduite de contournement 40 et une deuxième partie du fluide réfrigérant se dirige vers le premier dispositif de détente 7.

La première partie du fluide réfrigérant passe dans le troisième dispositif de détente 17. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans le refroidisseur 15 où il gagne de l'énergie calorifique au niveau du refroidisseur 15. Le fluide réfrigérant repasse à l'état gazeux. A la sortie du refroidisseur 15, le fluide réfrigérant rejoint la première conduite de contournement 30. Dans l'exemple illustré à la figure 8a, le fluide réfrigérant rejoint la première conduite de contournement 30 en amont de la première vanne d'arrêt 33 et du deuxième échangeur de chaleur interne 19'.

En sortie du deuxième échangeur de chaleur interne 19', une deuxième partie du fluide réfrigérant à haute pression passe dans le premier dispositif de détente 7. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans l'évaporateur 9 où il gagne de l'énergie calorifique en refroidissant le flux d'air intérieur 100. Le fluide réfrigérant repasse à l'état gazeux. A la sortie de l'évaporateur 9, le fluide réfrigérant est redirigé vers la première conduite de contournement 30. Afin que le fluide réfrigérant ne passe pas dans l'évapo/condenseur 13, le deuxième dispositif de détente 11 est fermé.

Le fluide réfrigérant à basse pression issu à la fois de l'évaporateur 9 et de la deuxième conduite de contournement 40 passe ensuite dans le deuxième échangeur de chaleur interne 19' où il gagne de l' énergie calorifique issue du fluide réfrigérant à haute pression traversant le deuxième échangeur de chaleur interne 19'.

Le fluide réfrigérant à basse pression passe ensuite dans le premier échangeur de chaleur interne 19 où il gagne de nouveau de l'énergie calorifique issue du fluide réfrigérant à haute pression traversant le premier échangeur de chaleur interne 19. Le fluide réfrigérant à basse pression retourne ensuite vers le compresseur 3.

Ce troisième mode de refroidissement est utile pour refroidir le flux d'air intérieur 100 ainsi que pour refroidir les éléments tels que des batteries et/ou des éléments électroniques refroidis directement ou indirectement par le refroidisseur 15.

Dans ce troisième mode de refroidissement, les deux échangeurs de chaleur interne 19 et 19' sont actifs à la fois pour le fluide réfrigérant issu de l'évaporateur 9 et le fluide réfrigérant traversant la deuxième conduite de contournement 40, et leurs effets s'additionnent. L'utilisation des échangeurs de chaleur interne 19 et 19' l'un après l'autre, permet de diminuer l'énergie calorifique du fluide réfrigérant en entrée du premier dispositif de détente 7. Le fluide réfrigérant à l'état liquide en sortie de l'échangeur de chaleur bifluide 5 est refroidi par le fluide réfrigérant à l'état gazeux et à basse pression sortant de l'évaporateur 9 et du refroidisseur 15. La différence d'énergie calorifique aux bornes de ces deux échangeurs de chaleur augmente sensiblement ce qui permet à la fois, une augmentation de la puissance frigorifique disponible au niveau dudit évaporateur 9 et du refroidisseur 15 et cela entraîne donc une amélioration du coefficient de performance (ou COP pour « coefficient of performance »).

De plus, l'ajout d'énergie calorifique au fluide réfrigérant à basse pression au niveau des premier 19 et deuxième 19' échangeurs de chaleur interne permet de limiter la proportion de fluide réfrigérant en phase liquide avant son entrée dans le compresseur 3, notamment lorsque le circuit de climatisation 1 comporte une bouteille déshydratante 14 disposée en aval de l'échangeur de chaleur bifluide 5.

Au niveau de la deuxième boucle de fluide caloporteur B, le fluide caloporteur gagne de l'énergie calorifique issue du fluide réfrigérant au niveau de l'échangeur de chaleur bifluide 5.

Comme illustré dans l'exemple de la figure 8a, une portion du fluide caloporteur circule dans la première conduite de circulation 50 et traverse le radiateur interne 54. Le fluide caloporteur ne perd cependant pas d'énergie calorifique car le volet d'obstruction 310 est refermé et bloque le flux d'air intérieur 100 de sorte qu'il ne traverse pas le radiateur interne 54.

Une autre portion du fluide caloporteur circule dans la deuxième conduite de circulation 60 et traverse le deuxième radiateur externe 64. Le fluide caloporteur perd de l'enthalpie au niveau dudit deuxième radiateur externe 64 en la relâchant dans le flux d'air extérieur 200. La quatrième vanne d'arrêt 63 est ouverte pour permettre le passage du fluide caloporteur.

Une solution alternative (non représentée) pour que le fluide caloporteur n'échange pas avec le flux d'air intérieur 100 au niveau du radiateur interne 54, est de munir, comme sur la figure 6, la première conduite de circulation 50 de la cinquième vanne d'arrêt 53 et de la fermer de sorte à empêcher le fluide caloporteur de circuler dans ladite première conduite de circulation 50.

### 4. quatrième mode de refroidissement :

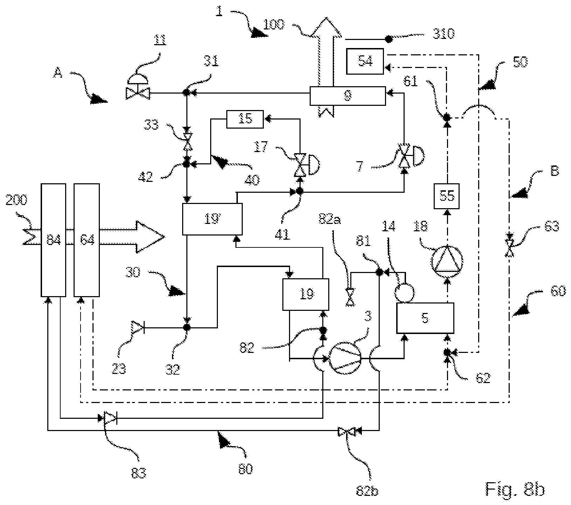

La figure 8b montre un quatrième mode de refroidissement. Ce quatrième mode de refroidissement est identique au troisième mode de refroidissement de la figure 8a, à la différence qu'en sortie de l'échangeur de chaleur bifluide 5, le fluide réfrigérant passe par la branche de dérivation 80 et le premier radiateur externe 84. Pour cela, le dispositif de redirection du fluide réfrigérant en sortie de l'échangeur de chaleur bifluide 5 redirige le fluide réfrigérant directement vers le premier radiateur externe 84 et non pas vers le premier échangeur de chaleur interne 19. Pour cela, dans l'exemple illustré à la figure 8b, la première vanne d'arrêt 82a dudit dispositif est fermée et la deuxième vanne d'arrêt 82b dudit dispositif est ouverte.

Au niveau du premier radiateur externe 84, le fluide réfrigérant cède de l'énergie calorifique au flux d'air externe 200. Cela permet d'évacuer plus de chaleur qu'uniquement au moyen du troisième radiateur 64. Cela est particulièrement utile lorsque la température extérieure est élevée et que les besoins en refroidissement sont élevés notamment lorsque beaucoup d'énergie calorifique est absorbée au niveau du refroidisseur 15 et que la simple évacuation de l'énergie calorifique par le deuxième radiateur 64 n'est pas suffisante, par exemple lors d'une charge ou décharge rapide des batteries d'un véhicule électrique ou hybride tout en conservant un refroidissement du flux d'air interne 100 pour le confort.

### 5. cinquième mode de refroidissement :

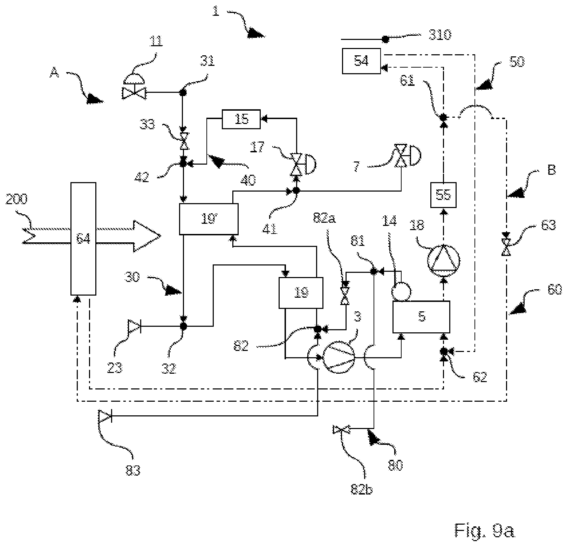

La figures 9a montre un cinquième mode de refroidissement dans lequel, au niveau de la première boucle de fluide réfrigérant, le fluide réfrigérant circule successivement dans :
- le compresseur 3 où le fluide réfrigérant passe à haute pression,
- l'échangeur de chaleur bifluide 5 au niveau duquel le fluide réfrigérant cède de l'énergie calorifique au fluide caloporteur de la deuxième boucle de fluide caloporteur B,
- le premier échangeur de chaleur interne 19,
- le deuxième échangeur de chaleur interne 19',
- la deuxième conduite de contournement 40, dans laquelle le fluide réfrigérant passe dans le troisième dispositif de détente 17 où il subit une perte de pression et passe à basse pression, ledit fluide réfrigérant à basse pression circule ensuite dans le refroidisseur 15,
- au moins le premier échangeur de chaleur interne 19 avant de rejoindre le compresseur 3.

Dans l'exemple de la figure 9a, la deuxième conduite de contournement 40 est reliée à la première conduite de contournement 30 en amont du deuxième échangeur de chaleur interne 19'. Le fluide réfrigérant passe dans dans le deuxième 19' puis dans le premier 19 échangeur de chaleur interne avant de retourner au compresseur 3.

Au niveau de la deuxième boucle de fluide caloporteur B, le fluide caloporteur en sortie de l'échangeur de chaleur bifluide 5 circule dans le deuxième radiateur externe 64 de la deuxième conduite de circulation 50.

Comme illustré par la figure 9a, une portion du fluide caloporteur en sortie de l'échangeur de chaleur bifluide 5 circule dans le radiateur interne 54 de la première conduite de circulation 50 et une autre portion du fluide caloporteur en sortie de l'échangeur de chaleur bifluide 5 circule dans le deuxième radiateur externe 64 de la deuxième conduite de circulation 50. Le volet d'obstruction 310 est fermé de sorte à empêcher le flux d'air intérieur 100 de circuler dans le radiateur interne 54.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse l'échangeur de chaleur bifluide 5 et subit une perte d'énergie calorifique du fait de son passage en phase liquide et du transfert de cette énergie calorifique vers le fluide caloporteur de la deuxième boucle de fluide caloporteur B. Le fluide réfrigérant à haute pression perd alors de l'énergie calorifique tout en restant à une pression constante.

Le fluide réfrigérant à haute pression ne passe pas dans la branche de dérivation 80 du fait que le dispositif de redirection du fluide réfrigérant en sortie de l'échangeur de chaleur bifluide 5 redirige le fluide réfrigérant directement vers le premier échangeur de chaleur 19. Pour cela, dans l'exemple illustré à la figure 7a, la première vanne d'arrêt 82a dudit dispositif est ouverte et la deuxième vanne d'arrêt 82b dudit dispositif est fermée.

Le fluide réfrigérant à haute pression passe ensuite dans le premier échangeur de chaleur interne 19 où il perd de l'énergie calorifique. Cette énergie calorifique est transférée au fluide réfrigérant à basse pression issu de la première conduite de contournement 30.

Le fluide réfrigérant à haute pression passe ensuite dans le deuxième échangeur de chaleur interne 19' où il perd de nouveau de l'énergie calorifique. Cette énergie calorifique est transférée au fluide réfrigérant à basse pression traversant la première conduite de contournement 30.

En sortie du deuxième échangeur de chaleur interne 19', le fluide réfrigérant ne rejoint pas l'évaporateur 9 du fait que le premier dispositif de détente 7 est fermé. Le fluide réfrigérant passe dans la deuxième conduite de contournement 40.

Le fluide réfrigérant passe dans le troisième dispositif de détente 17. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans le refroidisseur 15 où il gagne de l'énergie calorifique au niveau du refroidisseur 15. Le fluide réfrigérant repasse à l'état gazeux. A la sortie du refroidisseur 15, le fluide réfrigérant rejoint la première conduite de contournement 30. Dans l'exemple illustré à la figure 9a, le fluide réfrigérant rejoint la première conduite de contournement 30 en amont de la première vanne d'arrêt 33 et du deuxième échangeur de chaleur interne 19'. Afin que le fluide réfrigérant ne passe pas dans l'évapo/condenseur 13, le deuxième dispositif de détente 11ou la première vanne d'arrêt 33 est fermé selon le mode de réalisation de la deuxième conduite de contournement 40.

Le fluide réfrigérant à basse pression passe ensuite dans le deuxième échangeur de chaleur interne 19' où il gagne de l'énergie calorifique issue du fluide réfrigérant à haute pression traversant le deuxième échangeur de chaleur interne 19'.

Le fluide réfrigérant à basse pression passe ensuite dans le premier échangeur de chaleur interne 19 où il gagne de nouveau de l'énergie calorifique issue du fluide réfrigérant à haute pression traversant le premier échangeur de chaleur interne 19. Le fluide réfrigérant à basse pression retourne ensuite vers le compresseur 3.

Ce mode de refroidissement est utile pour refroidir les éléments tels que des batteries et/ou des éléments électroniques refroidis directement ou indirectement par le refroidisseur 15
Dans ce cinquième mode de refroidissement, les deux échangeurs de chaleur interne 19 et 19' sont actifs à la fois pour le fluide réfrigérant issu de l'évaporateur 9 et le fluide réfrigérant traversant la deuxième conduite de contournement 40, et leurs effets s'additionnent. L'utilisation des échangeurs de chaleur interne 19 et 19' l'un après l'autre, permet de diminuer l'énergie calorifique du fluide réfrigérant en entrée du premier dispositif de détente 7. Le fluide réfrigérant à l'état liquide en sortie de l'échangeur de chaleur bifluide 5 est refroidi par le fluide réfrigérant à l'état gazeux et à basse pression sortant de l'évaporateur 9 et du refroidisseur 15. La différence d'énergie calorifique aux bornes de ces deux échangeurs de chaleur augmente sensiblement ce qui permet à la fois, une augmentation de la puissance frigorifique disponible au niveau dudit évaporateur 9 et du refroidisseur 15 et cela entraîne donc une amélioration du coefficient de performance (ou COP pour « coefficient of performance »).

De plus, l'ajout d'énergie calorifique au fluide réfrigérant à basse pression au niveau des premier 19 et deuxième 19' échangeurs de chaleur interne permet de limiter la proportion de fluide réfrigérant en phase liquide avant son entrée dans le compresseur 3, notamment lorsque le circuit de climatisation 1 comporte une bouteille déshydratante 14 disposée en aval de l'échangeur de chaleur bifluide 5.

Au niveau de la deuxième boucle de fluide caloporteur B, le fluide caloporteur gagne de l'énergie calorifique issue du fluide réfrigérant au niveau de l'échangeur de chaleur bifluide 5.

Comme illustré dans l'exemple de la figure 9a, une portion du fluide caloporteur circule dans la première conduite de circulation 50 et traverse le radiateur interne 54. Le fluide caloporteur ne perd cependant pas d'énergie calorifique car le volet d'obstruction 310 est refermé et bloque le flux d'air intérieur 100 de sorte qu'il ne traverse pas le radiateur interne 54.

Une autre portion du fluide caloporteur circule dans la deuxième conduite de circulation 60 et traverse le deuxième radiateur externe 64. Le fluide caloporteur perd de l'enthalpie au niveau dudit deuxième radiateur externe 64 en la relâchant dans le flux d'air extérieur 200. La quatrième vanne d'arrêt 63 est ouverte pour permettre le passage du fluide caloporteur.

Une solution alternative (non représentée) pour que le fluide caloporteur n'échange pas avec le flux d'air intérieur 100 au niveau du radiateur interne 54, est de munir, comme sur la figure 6, la première conduite de circulation 50 de la cinquième vanne d'arrêt 53 et de la fermer de sorte à empêcher le fluide caloporteur de circuler dans ladite première conduite de circulation 50.

### 6. sixième mode de refroidissement :

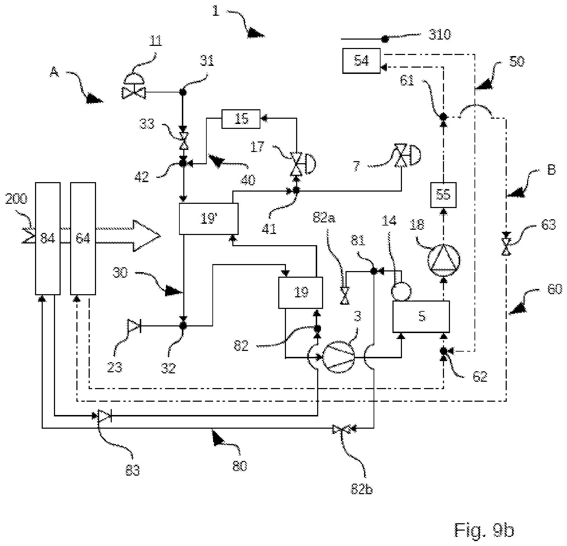

La figure 9b montre un sixième mode de refroidissement. Ce sixième mode de refroidissement est identique au cinquième mode de refroidissement de la figure 9a, à la différence qu'en sortie de l'échangeur de chaleur bifluide 5, le fluide réfrigérant passe par la branche de dérivation 80 et le premier radiateur externe 84. Pour cela, le dispositif de redirection du fluide réfrigérant en sortie de l'échangeur de chaleur bifluide 5 redirige le fluide réfrigérant directement vers le premier radiateur externe 84) et non pas vers le premier échangeur de chaleur interne 19. Pour cela, dans l'exemple illustré à la figure 9b, la première vanne d'arrêt 82a dudit dispositif est fermée et la deuxième vanne d'arrêt 82b dudit dispositif est ouverte.

Au niveau du premier radiateur externe 84, le fluide réfrigérant cède de l'énergie calorifique au flux d'air externe 200. Cela permet d'évacuer plus de chaleur qu'uniquement au moyen du troisième radiateur 64. Cela est particulièrement utile lorsque beaucoup d'énergie calorifique est absorbée au niveau du refroidisseur 15 et que la simple évacuation de l'énergie calorifique par le deuxième radiateur 64 n'est pas suffisante, par exemple lors d'une charge ou décharge rapide des batteries d'un véhicule électrique ou hybride.

### 7. premier mode de déshumidification :

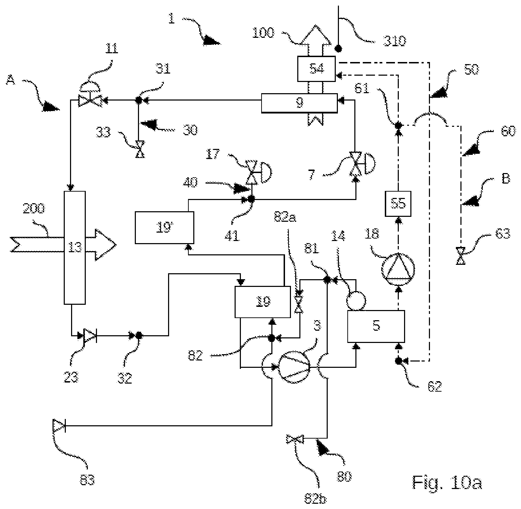

La figure 10a montre un premier mode de déshumidification dans lequel, au niveau de la première boucle de fluide réfrigérant, le fluide réfrigérant circule successivement dans :
- le compresseur 3 où le fluide réfrigérant passe à haute pression,
- l'échangeur de chaleur bifluide 5 au niveau duquel le fluide réfrigérant cède de l'énergie calorifique au fluide caloporteur de la deuxième boucle de fluide caloporteur B,
- le premier échangeur de chaleur interne 19,
- le deuxième échangeur de chaleur interne 19',
- le premier dispositif de détente 7 où le fluide réfrigérant subit une perte de pression et passe à basse pression,
- l'évaporateur 9 au niveau duquel fluide réfrigérant capte de l'énergie calorifique du flux d'air interne 100, refroidissant ce dernier,
- le deuxième dispositif de détente 11 que le fluide réfrigérant traverse sans perte de pression,
- l'évapo/condenseur 13 au niveau duquel le fluide réfrigérant capte de l'énergie calorifique du flux d'air externe 200, et
- le premier échangeur de chaleur interne 19 avant de retourner au compresseur 3.

Au niveau de la deuxième boucle de fluide caloporteur B, le fluide caloporteur circule dans le radiateur interne 54 et cède de l'énergie calorifique au flux d'air interne 100.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse l'échangeur de chaleur bifluide 5 et subit une perte d'énergie calorifique du fait de son passage en phase liquide et du transfert d'enthalpie vers le fluide caloporteur de la deuxième boucle de fluide caloporteur B. Le fluide réfrigérant à haute pression perd alors de l'énergie calorifique tout en restant à une pression constante.

Le fluide réfrigérant à haute pression passe ensuite dans le premier échangeur de chaleur interne 19 où il perd de l'énergie calorifique. Cette énergie calorifique est transférée au fluide réfrigérant à basse pression en provenance de l'évapo/condenseur 13.

Le fluide réfrigérant à haute pression passe ensuite dans le deuxième échangeur de chaleur interne 19' où il ne perd pas d'énergie calorifique car il n'y a pas de circulation de fluide réfrigérant à basse pression dans ledit deuxième échangeur de chaleur interne 19'.

Comme illustré sur la figure 10a, en sortie du deuxième échangeur de chaleur interne 19', le fluide réfrigérant ne circule pas dans la deuxième conduite de contournement 40 du fait que le troisième dispositif de détente 17 est fermé.

Le fluide réfrigérant à haute pression passe dans le premier dispositif de détente 7. Le fluide réfrigérant à haute pression subit une perte de pression isenthalpique et passe dans un état de mélange diphasique. Le fluide réfrigérant est maintenant dit à basse pression.

Le fluide réfrigérant traverse ensuite l'évaporateur 9 où il capte de l'énergie calorifique en refroidissant le flux d'air intérieur 100.

A la sortie de l'évaporateur 9, le fluide réfrigérant est redirigé vers l'évapo/condenseur 13. Pour cela, la première vanne d'arrêt 33 de la première conduite de contournement est fermée. Avant d'arriver à l'évapo/condenseur 13, le fluide réfrigérant passe dans le premier dispositif de détente 11 qu'il traverse sans perte de pression.

Le fluide réfrigérant à basse pression traverse ensuite l'évapo/condenseur 13 où absorbe de l'énergie calorifique du flux d'air extérieur 200. Le fluide réfrigérant repasse ainsi à l'état gazeux.

Le fluide réfrigérant à basse pression passe ensuite dans le premier échangeur de chaleur interne 19 où il gagne de nouveau de l'énergie calorifique issue du fluide réfrigérant à haute pression traversant le premier échangeur de chaleur interne 19. Le fluide réfrigérant à basse pression retourne ensuite vers le compresseur 3.

Dans ce premier mode de déshumidification, seul le premier échangeur de chaleur interne 19 est actif. Du fait que l'énergie calorifique du fluide réfrigérant à basse pression en entrée du compresseur 3 est plus importante, l'énergie calorifique du fluide réfrigérant à haute pression en sortie du compresseur 3 sera elle aussi supérieure à l'énergie calorifique du fluide réfrigérant lorsqu'il n'y a pas d'échangeur de chaleur interne.

De plus, l'ajout d'énergie calorifique au fluide réfrigérant à basse pression au niveau du premier échangeur de chaleur interne 19 permet de limiter la proportion de fluide réfrigérant en phase liquide avant son entrée dans le compresseur 3, notamment lorsque le circuit de climatisation 1 comporte une bouteille déshydratante 14 disposée en aval de l'échangeur de chaleur bifluide 5. L'effet du premier échangeur de chaleur interne 19 est limité du fait que sa longueur est comprise entre 50 et 120mm. Cette taille permet de limiter les échanges de chaleur entre le fluide réfrigérant à haute pression et le fluide réfrigérant à basse pression de sorte que l'énergie calorifique échangée permet de limiter la proportion de fluide réfrigérant en phase liquide avant son entrée dans le compresseur 3 sans pour autant pénaliser l'efficacité du mode pompe à chaleur. En effet, le but de ce mode pompe à chaleur est de relâcher le plus d'énergie calorifique possible dans le flux d'air intérieur 100 afin de le réchauffer au niveau de l'évaporateur 9. Cette énergie calorifique vient, dans ce premier mode de déshumidification, du flux d'air extérieur 200 par l'intermédiaire de l'évapo/condenseur 13.

Au niveau de la deuxième boucle de fluide caloporteur B, le fluide caloporteur gagne de l'énergie calorifique issue du fluide réfrigérant au niveau de l'échangeur de chaleur bifluide 5.

Comme illustré sur la figure 10a, le fluide caloporteur circule dans la première conduite de circulation 50 et traverse le radiateur interne 54. Le fluide caloporteur perd de l'énergie calorifique en réchauffant le flux d'air intérieur 100. Pour cela, le volet d'obstruction 310 est ouvert et/ou la cinquième vanne d'arrêt 53 est ouverte. La quatrième vanne d'arrêt 63 est quant à elle fermée pour empêcher le passage du fluide caloporteur dans la deuxième conduite de circulation 60.

Ce premier mode de déshumidification est utile pour déshumidifier le flux d'air interne 100 par un refroidissement au niveau de l'évaporateur 9 qui permet une condensation de l'humidité et ensuite par un réchauffage du flux d'air interne 100 au niveau du radiateur interne 54.

De plus, l'élément électrique chauffant 55 peut être en fonctionnement afin de fournir un apport supplémentaire d'énergie calorifique au fluide caloporteur pour réchauffer le flux d'air intérieur 100.

### 8. deuxième mode de déshumidification :

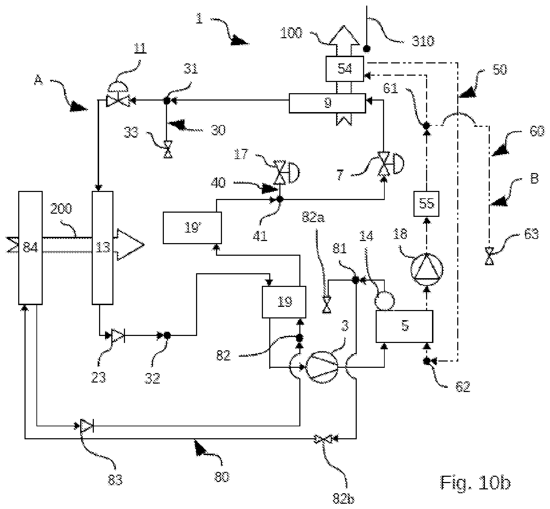

La figure 10b montre un deuxième mode de déshumidification. Ce deuxième mode de déshumidification est identique au premier mode de déshumidification de la figure 10a, à la différence qu'en sortie de l'échangeur de chaleur bifluide 5, le fluide réfrigérant passe par la branche de dérivation 80 et le premier radiateur externe 84. Pour cela, le dispositif de redirection du fluide réfrigérant en sortie de l'échangeur de chaleur bifluide 5 redirige le fluide réfrigérant directement vers le premier radiateur externe 84 et non pas vers le premier échangeur de chaleur interne 19. Pour cela, dans l'exemple illustré à la figure 10b, la première vanne d'arrêt 82a dudit dispositif est fermée et la deuxième vanne d'arrêt 82b dudit dispositif est ouverte.

Au niveau du premier radiateur externe 84, le fluide réfrigérant cède de l'énergie calorifique au flux d'air externe 200. Cela permet d'évacuer plus de chaleur qu'uniquement au moyen du radiateur interne 54. Cela est particulièrement utile lorsque beaucoup d'énergie calorifique est absorbée au niveau de l'évaporateur 9 et de l'évapo/condenseur 13 et que l'évacuation de l'énergie calorifique par le radiateur interne 54 n'est pas suffisante.

### 9. troisième mode de déshumidification :

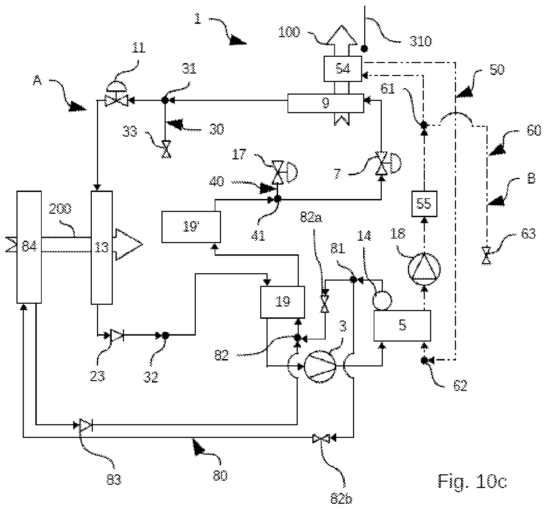

La figure 10c montre un troisième mode de déshumidification. Ce troisième mode de déshumidification est identique au premier mode de déshumidification de la figure 10a, à la différence qu'en sortie de l'échangeur de chaleur bifluide 5, une première partie du fluide réfrigérant passe par la branche de dérivation 80 et le premier radiateur externe 84 et une deuxième partie du fluide réfrigérant passe directement vers le premier échangeur de chaleur interne 19. Pour cela, le dispositif de redirection du fluide réfrigérant en sortie de l'échangeur de chaleur bifluide 5 redirige le fluide réfrigérant à la fois vers le premier échanger de chaleur interne 19 et vers le premier radiateur externe 84. Pour cela, dans l'exemple illustré à la figure 10c, la première vanne d'arrêt 82a dudit dispositif est ouverte et la deuxième vanne d'arrêt 82b dudit dispositif est ouverte.

Au niveau du premier radiateur externe 84, le fluide réfrigérant cède de l'énergie calorifique au flux d'air externe 200. Cela permet d'évacuer plus de chaleur qu'uniquement au moyen du radiateur interne 54. Cela est particulièrement utile lorsque beaucoup d'énergie calorifique est absorbée au niveau de l'évaporateur 9 et de l'évapo/condenseur 13 et que l'évacuation de l'énergie calorifique par le radiateur interne 54 n'est pas suffisante.

### 10. quatrième mode de déshumidification :

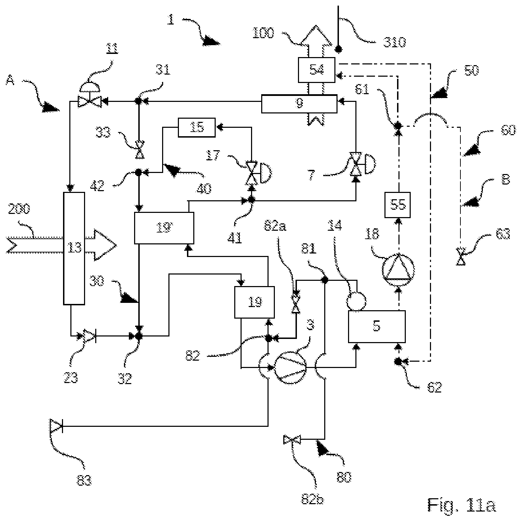

La figure 11a montre un deuxième mode de déshumidification dans lequel, au niveau de la première boucle de fluide réfrigérant, le fluide réfrigérant circule successivement dans :
- le compresseur 3 où fluide réfrigérant passe à haute pression,
- l'échangeur de chaleur bifluide 5 au niveau duquel fluide réfrigérant cède de l'énergie calorifique au fluide caloporteur de la deuxième boucle de fluide caloporteur B,
- le premier échangeur de chaleur interne 19,
- le deuxième échangeur de chaleur interne 19',
- une première partie du fluide réfrigérant passe dans la deuxième conduite de contournement 40, passe dans le troisième dispositif de détente 17 où il subit une perte de pression et passe à basse pression, ledit fluide réfrigérant à basse pression circule ensuite dans le refroidisseur 15,
- une deuxième partie du fluide réfrigérant passe dans le premier dispositif de détente 7 où il subit une perte de pression et passe à basse pression, l'évaporateur 9 au niveau duquel il capte de l'énergie calorifique du flux d'air interne 100, refroidissant ce dernier, le deuxième dispositif de détente 11 que le fluide réfrigérant traverse sans perte de pression, l'évapo/condenseur 13 au niveau duquel le fluide réfrigérant capte de l'énergie calorifique du flux d'air externe 200.

Les deux parties de fluide réfrigérant se rejoignent en amont du premier échangeur de chaleur interne 19. Dans l'exemple de la figure 11a, le fluide réfrigérant en sortie du refroidisseur 15 passe par la deuxième conduite de contournement 30 et passe dans le deuxième échangeur de chaleur interne 19'.

Le fluide réfrigérant passe ensuite dans le premier échangeur de chaleur interne 19 avant de retourner au compresseur 3.

Quel que soit le mode de réalisation de la connexion de la deuxième conduite de contournement 40 illustré par les figures 1 à 4, les deux parties du fluide réfrigérant se rejoignent en amont du premier échangeur de chaleur interne 19.

Au niveau de la deuxième boucle de fluide caloporteur B, le fluide caloporteur circule dans le radiateur interne 54 et cède de l'énergie calorifique au flux d'air interne 100.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse l'échangeur de chaleur bifluide 5 et subit une perte d'énergie calorifique du fait de son passage en phase liquide et du transfert d'enthalpie vers le fluide caloporteur de la deuxième boucle de fluide caloporteur B. Le fluide réfrigérant à haute pression perd alors de l'énergie calorifique tout en restant à une pression constante.

Le fluide réfrigérant à haute pression passe ensuite dans le premier échangeur de chaleur interne 19 où il perd de l'énergie calorifique. Cette énergie calorifique est transférée au fluide réfrigérant à basse pression en provenance de l'évapo/condenseur 13.

Le fluide réfrigérant à haute pression passe ensuite dans le deuxième échangeur de chaleur interne 19' où il ne perd pas d'énergie calorifique car il n'y a pas de circulation de fluide réfrigérant à basse pression dans ledit deuxième échangeur de chaleur interne 19'.

Comme illustré sur la figure 11a, en sortie du deuxième échangeur de chaleur interne 19', le fluide réfrigérant circule à la fois dans la deuxième conduite de contournement 40 et vers l'évaporateur 9.

Une première partie du fluide réfrigérant à haute pression passe dans le troisième dispositif de détente 17. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans le refroidisseur 15 où il gagne de l'énergie calorifique au niveau du refroidisseur 15. Le fluide réfrigérant repasse à l'état gazeux. A la sortie du refroidisseur 15, le fluide réfrigérant rejoint la première conduite de contournement 30. Dans l'exemple illustré à la figure 11a, le fluide réfrigérant rejoint la première conduite de contournement 30 en amont de la première vanne d'arrêt 33 et du deuxième échangeur de chaleur interne 19'. Afin que le fluide réfrigérant ne passe pas dans l'évapo/condenseur 13, le deuxième dispositif de détente 11 ou la première vanne d'arrêt 33 est fermé selon le mode de réalisation de la deuxième conduite de contournement 40.

Le fluide réfrigérant à basse pression passe ensuite dans le deuxième échangeur de chaleur interne 19' où il gagne de l'énergie calorifique issue du fluide réfrigérant à haute pression traversant le deuxième échangeur de chaleur interne 19'.

Une deuxième partie du fluide réfrigérant à haute pression passe dans le premier dispositif de détente 7. Le fluide réfrigérant à haute pression subit une perte de pression isenthalpique et passe dans un état de mélange diphasique. Le fluide réfrigérant est maintenant dit à basse pression.

Le fluide réfrigérant traverse ensuite l'évaporateur 9 où il capte de l'énergie calorifique en refroidissant le flux d'air intérieur 100.

A la sortie de l'évaporateur 9, le fluide réfrigérant est redirigé vers l'évapo/condenseur 13. Pour cela, la première vanne d'arrêt 33 de la première conduite de contournement est fermée. Avant d'arriver à l'évapo/condenseur 13, le fluide réfrigérant passe dans le premier dispositif de détente 11 qu'il traverse sans perte de pression.

Le fluide réfrigérant à basse pression traverse ensuite l'évapo/condenseur 13 où absorbe de l'énergie calorifique du flux d'air extérieur 200. Le fluide réfrigérant repasse ainsi à l'état gazeux.

Les deux parties de fluide réfrigérant à basse pression se rejoignent en amont du premier échangeur de chaleur interne 19. Le fluide réfrigérant passe ensuite dans le premier échangeur de chaleur interne 19 où il gagne de nouveau de l'énergie calorifique issue du fluide réfrigérant à haute pression traversant le premier échangeur de chaleur interne 19. Le fluide réfrigérant à basse pression retourne ensuite vers le compresseur 3.

Dans ce quatrième mode de déshumidification illustré à la figure 11a, les deux échangeurs de chaleur interne 19 et 19' sont actifs à la fois pour le fluide réfrigérant issu de l'évaporateur 9 et le fluide réfrigérant traversant la deuxième conduite de contournement 40, et leurs effets s'additionnent. L'utilisation des échangeurs de chaleur interne 19 et 19' l'un après l'autre, permet de diminuer l'énergie calorifique du fluide réfrigérant en entrée du premier dispositif de détente 7. Le fluide réfrigérant à l'état liquide en sortie de l'échangeur de chaleur bifluide 5 est refroidi par le fluide réfrigérant à l'état gazeux et à basse pression sortant de l'évaporateur 9 et du refroidisseur 15. La différence d'énergie calorifique aux bornes de ces deux échangeurs de chaleur augmente sensiblement ce qui permet à la fois, une augmentation de la puissance frigorifique disponible au niveau dudit évaporateur 9 et du refroidisseur 15 et cela entraîne donc une amélioration du coefficient de performance (ou COP pour « coefficient of performance »).

De plus, l'ajout d'énergie calorifique au fluide réfrigérant à basse pression au niveau des premier 19 et deuxième 19' échangeurs de chaleur interne permet de limiter la proportion de fluide réfrigérant en phase liquide avant son entrée dans le compresseur 3, notamment lorsque le circuit de climatisation 1 comporte une bouteille déshydratante 14 disposée en aval de l'échangeur de chaleur bifluide 5.

Cependant, le deuxième échangeur de chaleur interne 19' peut ne pas être actif si la deuxième conduite de contournement 40 est raccordée en aval dudit deuxième échangeur de chaleur interne 19' comme dans les modes de réalisation des figures 3 et 4.

Au niveau de la deuxième boucle de fluide caloporteur B, le fluide caloporteur gagne de l'énergie calorifique issue du fluide réfrigérant au niveau de l'échangeur de chaleur bifluide 5.

Comme illustré sur la figure 11a, le fluide caloporteur circule dans la première conduite de circulation 50 et traverse le radiateur interne 54. Le fluide caloporteur perd de l'énergie calorifique en réchauffant le flux d'air intérieur 100. Pour cela, le volet d'obstruction 310 est ouvert et/ou la cinquième vanne d'arrêt 53 est ouverte. La quatrième vanne d'arrêt 63 est quant à elle fermée pour empêcher le passage du fluide caloporteur dans la deuxième conduite de circulation 60.

Ce quatrième mode de déshumidification est utile pour déshumidifier le flux d'air interne 100 par un refroidissement au niveau de l'évaporateur 9 qui permet une condensation de l'humidité et ensuite par un réchauffage du flux d'air interne 100 au niveau du radiateur interne 54. De l'énergie calorifique est également récupérée au niveau du refroidisseur 15 afin de réchauffer le flux d'air interne 100 via le radiateur interne 54.

De plus, l'élément électrique chauffant 55 peut être en fonctionnement afin de fournir un apport supplémentaire d'énergie calorifique au fluide caloporteur pour réchauffer le flux d'air intérieur 100.

### 11. cinquième mode de déshumidification :

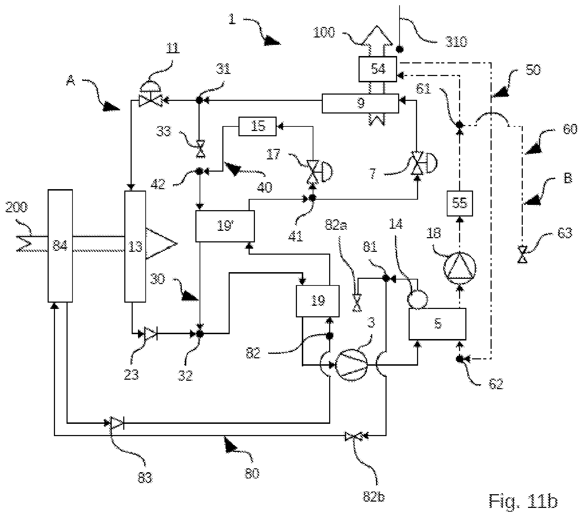

La figure 11b montre un cinquième mode de déshumidification. Ce cinquième mode de déshumidification est identique au quatrième mode de déshumidification de la figure 11a, à la différence qu'en sortie de l'échangeur de chaleur bifluide 5, le fluide réfrigérant passe par la branche de dérivation 80 et le premier radiateur externe 84. Pour cela, le dispositif de redirection du fluide réfrigérant en sortie de l'échangeur de chaleur bifluide 5 redirige le fluide réfrigérant directement vers le premier radiateur externe 84 et non pas vers le premier échangeur de chaleur interne 19. Pour cela, dans l'exemple illustré à la figure 11b, la première vanne d'arrêt 82a dudit dispositif est fermée et la deuxième vanne d'arrêt 82b dudit dispositif est ouverte.

Au niveau du premier radiateur externe 84, le fluide réfrigérant cède de l'énergie calorifique au flux d'air externe 200. Cela permet d'évacuer plus de chaleur qu'uniquement au moyen du radiateur interne 54. Cela est particulièrement utile lorsque beaucoup d'énergie calorifique est absorbée au niveau de l'évaporateur 9, de l'évapo/condenseur 13 et du refroidisseur 15 et que l'évacuation de l'énergie calorifique par le radiateur interne 54 n'est pas suffisante.

### 12. sixième mode de déshumidification :

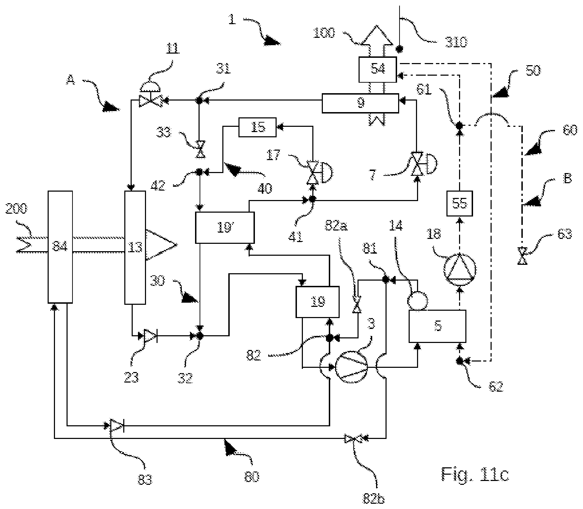

La figure 11c montre un sixième mode de déshumidification. Ce sixième mode de déshumidification est identique au quatrième mode de déshumidification de la figure 11a, à la différence qu'en sortie de l'échangeur de chaleur bifluide 5, une première partie du fluide réfrigérant passe par la branche de dérivation 80 et le premier radiateur externe 84 et une deuxième partie du fluide réfrigérant passe directement vers le premier échangeur de chaleur interne 19. Pour cela, le dispositif de redirection du fluide réfrigérant en sortie de l'échangeur de chaleur bifluide 5 redirige le fluide réfrigérant à la fois vers le premier échangeur de chaleur interne 19 et vers le premier radiateur externe 84. Pour cela, dans l'exemple illustré à la figure 10b, la première vanne d'arrêt 82a dudit dispositif est ouverte et la deuxième vanne d'arrêt 82b dudit dispositif est ouverte.

Au niveau du premier radiateur externe 84, le fluide réfrigérant cède de l'énergie calorifique au flux d'air externe 200. Cela permet d'évacuer plus de chaleur qu'uniquement au moyen du radiateur interne 54. Cela est particulièrement utile lorsque beaucoup d'énergie calorifique est absorbée au niveau de l'évaporateur 9, de l'évapo/condenseur 13 et du refroidisseur 15 et que l'évacuation de l'énergie calorifique par le radiateur interne 54 n'est pas suffisante.

D'autres modes de fonctionnement tels que des modes de dégivrage, de pompe à chaleur, de récupération de chaleur au niveau du refroidisseur 15 peuvent également être envisagés avec une telle architecture du dispositif de gestion thermique.

Ainsi, on voit bien que de part son architecture et notamment de la présence de la branche de dérivation 80 et du premier radiateur externe 84, le dispositif de gestion thermique peut dissiper une plus grande quantité d'énergie calorifique. Cela est particulièrement utile lorsque qu'au niveau du refroidisseur 15 il est demandé une grande puissance de refroidissement, par exemple lors d'une charge ou décharge rapide des batteries d'un véhicule électrique ou hybride.

| Modes de fonctionnement | Fig : | Fonction : |
|---|---|---|
| 1. premier mode de refroidissement | 7a | Refroidissement du flux d'air interne 100 via l'évaporateur 9 et évacuation de l'énergie calorifique via le deuxième radiateur externe 64. |
| 2. deuxième mode de refroidissement | 7b | Refroidissement du flux d'air interne 100 via l'évaporateur 9 et évacuation de l'énergie calorifique via les premier 84 et deuxième 64 radiateurs externes. |
| 3. troisième mode de refroidissement | 8a | Refroidissement du flux d'air interne 100 via l'évaporateur 9 et refroidissement d'éléments tels que des batteries via le refroidisseur 15. Évacuation de l'énergie calorifique via le deuxième radiateur externe 64. |
| 4. quatrième mode de refroidissement | 8b | Refroidissement du flux d'air interne 100 via l'évaporateur 9 et refroidissement d'éléments tels que des batteries via le refroidisseur 15. Évacuation de l'énergie calorifique via les premier 84 et deuxième 64 radiateurs externes. |
| 5. cinquième mode de refroidissement | 9a | Refroidissement d'éléments tels que des batteries via le refroidisseur 15. Évacuation de l'énergie calorifique via le deuxième radiateur externe 64. |
| 6. sixième mode de refroidissement | 9b | Refroidissement d'éléments tels que des batteries via le refroidisseur 15. Évacuation de l'énergie calorifique via les premier 84 et deuxième 64 radiateurs externes. |
| 7. premier mode de déshumidification | 10a | Déshumidification du flux d'air interne 100 via l'évaporateur 9 et le radiateur interne 54. Absorption d'énergie calorifique du flux d'air externe 200 via l'évapo/condenseur 13. |
| 8. deuxième mode de déshumidification | 10b | Déshumidification du flux d'air interne 100 via l'évaporateur 9 et le radiateur interne 54. Absorption d'énergie calorifique du flux d'air externe 200 via l'évapo/condenseur 13. Évacuation d'une partie de l'énergie calorifique via le premier radiateur externe 84 connecté en série. |
| 9. troisième mode de déshumidification | 10c | Déshumidification du flux d'air interne 100 via l'évaporateur 9 et le radiateur interne 54. Absorption d'énergie calorifique du flux d'air externe 200 via l'évapo/condenseur 13. Évacuation d'une partie de l'énergie calorifique via le premier radiateur externe 84 connecté en parallèle. |
| 10. quatrième mode de déshumidification | 11a | Déshumidification du flux d'air interne 100 via l'évaporateur 9 et le radiateur interne 54. Refroidissement d' éléments tels que des batteries via le refroidisseur 15. Absorption d'énergie calorifique du flux d'air externe 200 via l'évapo/condenseur 13. |
| 11. cinquième mode de déshumidification | 11b | Déshumidification du flux d'air interne 100 via l'évaporateur 9 et le radiateur interne 54. Refroidissement d'éléments tels que des batteries via le refroidisseur 15. Absorption d'énergie calorifique du flux d'air externe 200 via l'évapo/condenseur 13. Évacuation d'une partie de l'énergie calorifique via le premier radiateur externe 84 connecté en série. |
| 12. sixième mode de déshumidification | 11c | Déshumidification du flux d'air interne 100 via l'évaporateur 9 et le radiateur interne 54. Refroidissement d'éléments tels que des batteries via le refroidisseur 15. Absorption d'énergie calorifique du flux d'air externe 200 via l'évapo/condenseur 13. Évacuation d'une partie de l'énergie calorifique via le premier radiateur externe 84 connecté en parallèle. |

## Revendications

1. Dispositif de gestion thermique comportant un circuit de climatisation indirect (1) pour véhicule automobile comportant :
- une première boucle de fluide réfrigérant (A) dans laquelle est destiné à circuler un fluide réfrigérant, ladite première boucle de fluide réfrigérant (A) comportant dans le sens de circulation du fluide réfrigérant un compresseur (3), un échangeur de chaleur bifluide (5), un premier dispositif de détente (7), un évaporateur (9), un deuxième dispositif de détente (11), un évapo/condenseur (13), et
- une première conduite de contournement (30) de l'évapo/condenseur (13) comportant une première vanne d'arrêt (33),
- un premier échangeur de chaleur interne (19), permettant un échange de chaleur entre le fluide réfrigérant à haute pression en sortie de l'échangeur de chaleur bifluide (5) et le fluide réfrigérant à basse pression en sortie du de l'évapo/condenseur (13) ou de la première conduite de contournement (30),
- un deuxième échangeur de chaleur interne (19') permettant un échange de chaleur entre le fluide réfrigérant à haute pression en sortie du premier échangeur de chaleur interne (19) et le fluide réfrigérant à basse pression circulant dans la première conduite de contournement (30),
- une deuxième conduite de contournement (40) du premier dispositif de détente (7) et du de l'évaporateur (9), ladite deuxième conduite de contournement (40) comportant un troisième dispositif de détente (17) disposé en amont d'un refroidisseur (15),
- une deuxième boucle de fluide caloporteur (B) dans laquelle est destiné à circuler un fluide caloporteur,
l'échangeur de chaleur bifluide (5) étant agencé conjointement d'une part sur la première boucle de fluide réfrigérant (A) en aval du compresseur (3), entre ledit compresseur (3) et le premier dispositif de détente (7), et d'autre part sur la deuxième boucle de fluide caloporteur (B), **caractérisé en ce que** le circuit de climatisation indirect (1) comporte une branche de dérivation (80) reliant une première bifurcation (81) disposée en aval de l'échangeur de chaleur bifluide (5), entre ledit échangeur de chaleur bifluide (5) et le premier échangeur de chaleur interne (19), à une deuxième bifurcation (82) disposée en amont du premier échangeur de chaleur interne (19), entre ledit premier échangeur de chaleur interne (19) et la première bifurcation (81), ladite boucle de dérivation (80) comportant un premier radiateur externe (84), et **en ce que** le circuit de climatisation indirect (1) comporte un dispositif de redirection du fluide réfrigérant en sortie de l'échangeur de chaleur bifluide (5) directement vers le premier échangeur de chaleur interne (19) et/ou vers la branche de dérivation (80), et **en ce que** ledit dispositif de redirection du fluide réfrigérant en sortie de l'échangeur de chaleur bifluide (5) comporte :
- une première vanne d'arrêt (82a) disposée sur la boucle principale (A) en aval de la première bifurcation (81), entre la première (81) et la deuxième (82) bifurcation, et
- une deuxième vanne d'arrêt (82b) disposée sur la branche de dérivation (80) en aval de la première bifurcation (81), entre la première bifurcation (81) et le premier radiateur externe (84).

2. Dispositif de gestion thermique selon la revendication 1, **caractérisé en ce que** ledit dispositif de redirection du fluide réfrigérant en sortie de l'échangeur de chaleur bifluide (5) comporte une vanne trois-voies disposée au niveau de la première bifurcation (81).

3. Dispositif de gestion thermique selon l'une des revendications précédentes, **caractérisé en ce que** la branche de dérivation (80) comporte une vanne anti-retour (83) disposée en aval du premier radiateur externe (84), entre ledit premier radiateur externe (84) et la deuxième bifurcation (82), de sorte à bloquer le fluide réfrigérant en provenance de ladite deuxième bifurcation (82).

4. Dispositif de gestion thermique selon l'une des revendications précédentes, **caractérisé en ce que** la deuxième boucle de fluide caloporteur (B) comporte :
- l'échangeur de chaleur bifluide (5),
- une première conduite de circulation (50) de fluide caloporteur comportant un radiateur interne (54) destiné à être traversé par un flux d'air intérieur (100) au véhicule automobile, et reliant un premier point de jonction (61) disposé en aval de l'échangeur de chaleur bifluide (5) et un deuxième point de jonction (62) disposé en amont dudit échangeur de chaleur bifluide (5),
- une deuxième conduite de circulation (60) de fluide caloporteur comportant un deuxième radiateur externe (64) destiné à être traversé par un flux d'air extérieur (200) au véhicule automobile, et reliant le premier point de jonction (61) disposé en aval de l'échangeur de chaleur bifluide (5) et le deuxième point de jonction (62) disposé en amont dudit échangeur de chaleur bifluide (5), et
- une pompe (18) disposée en aval ou en amont de l'échangeur de chaleur bifluide (5), entre le premier point de jonction (61) et le deuxième point de jonction (62).

5. Dispositif de gestion thermique selon la revendication 4, **caractérisé en ce qu'**il est configuré pour fonctionner dans un mode de refroidissement dans lequel le fluide réfrigérant circule dans la première boucle de fluide réfrigérant (A) successivement dans :
- le compresseur (3) où le fluide réfrigérant passe à haute pression,
- l'échangeur de chaleur bifluide (5),
- le premier radiateur externe (84) via la branche de dérivation (80),
- le premier échangeur de chaleur interne (19),
- le deuxième échangeur de chaleur interne (19'),
- une première partie du fluide réfrigérant passe dans la deuxième conduite de contournement (40), passe dans le troisième dispositif de détente (17) où il subit une perte de pression et passe à basse pression, ledit fluide réfrigérant à basse pression circule ensuite dans le refroidisseur (15),
- une deuxième partie du fluide réfrigérant passe dans le premier dispositif de détente (7), où il subit une perte de pression et passe à basse pression, l'évaporateur (9) et dans la première conduite de contournement (30),
les deux parties de fluide réfrigérant se rejoignant en amont du premier échangeur de chaleur interne 19, le fluide réfrigérant traverse ensuite au moins le premier échangeur de chaleur interne 19 avant de retourner au compresseur 3,
et dans lequel, dans la deuxième boucle de fluide caloporteur (B), le fluide caloporteur en sortie de l'échangeur de chaleur bifluide (5) circule dans le deuxième radiateur externe (64) de la deuxième conduite de circulation (60).

6. Dispositif de gestion thermique selon la revendication 4, **caractérisé en ce qu'**il est configuré pour fonctionner dans un mode de déshumidification dans lequel le fluide réfrigérant circule dans la première boucle de fluide réfrigérant (A) successivement dans :
- le compresseur (3) où le fluide réfrigérant passe à haute pression,
- l'échangeur de chaleur bifluide (5),
- le premier radiateur externe (84) via la branche de dérivation (80),
- le premier échangeur de chaleur interne (19),
- le deuxième échangeur de chaleur interne (19'),
- une première partie du fluide réfrigérant passe dans la deuxième conduite de contournement (40), passe dans le troisième dispositif de détente (17) où il subit une perte de pression et passe à basse pression, ledit fluide réfrigérant à basse pression circule ensuite dans le refroidisseur (15),
- une deuxième partie du fluide réfrigérant passe dans le premier dispositif de détente (7) où il subit une perte de pression et passe à basse pression, l'évaporateur (9), le deuxième dispositif de détente (11) que le fluide réfrigérant traverse sans perte de pression, et l'évapo/condenseur (13),
les deux parties de fluide réfrigérant se rejoignant en amont du premier échangeur de chaleur interne (19), le fluide réfrigérant traverse ensuite le premier échangeur de chaleur interne (19) avant de retourner au compresseur (3),
et dans lequel, dans la deuxième boucle de fluide caloporteur (B), le fluide caloporteur en sortie de l'échangeur de chaleur bifluide (5) circule dans le radiateur interne (54) et cède de l'énergie calorifique.

7. Dispositif de gestion thermique selon la revendication 4, **caractérisé en ce qu'**il est configuré pour fonctionner dans un autre mode de déshumidification dans lequel le fluide réfrigérant circule dans la première boucle de fluide réfrigérant (A) successivement dans :
- le compresseur (3) où le fluide réfrigérant passe à haute pression,
- l'échangeur de chaleur bifluide (5),
- une partie du fluide réfrigérant passant par le premier radiateur externe (84) via la branche de dérivation (80) et un autre partie allant directement vers le premier échangeur de chaleur interne (19),
- le premier échangeur de chaleur interne (19),
- le deuxième échangeur de chaleur interne (19'),
- une première partie du fluide réfrigérant passe dans la deuxième conduite de contournement (40), passe dans le troisième dispositif de détente (17) où il subit une perte de pression et passe à basse pression, ledit fluide réfrigérant à basse pression circule ensuite dans le refroidisseur (15),
- une deuxième partie du fluide réfrigérant passe dans le premier dispositif de détente (7) où il subit une perte de pression et passe à basse pression, l'évaporateur (9), le deuxième dispositif de détente (11) que le fluide réfrigérant traverse sans perte de pression, et l'évapo/condenseur (13),
les première et deuxièmes parties de fluide réfrigérant se rejoignant en amont du premier échangeur de chaleur interne (19), le fluide réfrigérant traverse ensuite le premier échangeur de chaleur interne (19) avant de retourner au compresseur (3),
et dans lequel, dans la deuxième boucle de fluide caloporteur (B), le fluide caloporteur en sortie de l'échangeur de chaleur bifluide (5) circule dans le radiateur interne (54) et cède de l'énergie calorifique.

## Patentansprüche

1. Vorrichtung zur thermischen Verwaltung, die einen Kreislauf zur indirekten Klimasteuerung (1) für ein Kraftfahrzeug umfasst, der Folgendes umfasst:
- eine erste Kältemittelschleife (A), die dazu bestimmt ist, ein Kältemittel zirkulieren zu lassen, wobei die erste Kältemittelschleife (A) in der Zirkulationsrichtung des Kältemittels einen Kompressor (3), einen Zwei-Fluid-Wärmetauscher (5), eine erste Entspannungsvorrichtung (7), einen Verdampfer (9), eine zweite Entspannungsvorrichtung (11) und einen Verdampfer-Kondensator (13) umfasst, und
- eine erste Bypassleitung (30) des Verdampfer-Kondensators (13), die ein erstes Absperrventil (33) umfasst,
- einen ersten internen Wärmetauscher (19), der einen Wärmeaustausch zwischen dem Hochdruckkältemittel am Ausgang des Zwei-Fluid-Wärmetauschers (5) und dem Niederdruckkältemittel am Ausgang des Verdampfer-Kondensators (13) oder der ersten Bypassleitung (30) gestattet,
- einen zweiten internen Wärmetauscher (19'), der einen Wärmeaustausch zwischen dem Hochdruckkältemittel am Ausgang des ersten internen Wärmetauschers (19) und dem Niederdruckkältemittel, das in der ersten Bypassleitung (30) zirkuliert, gestattet,
- eine zweite Bypassleitung (40) der ersten Entspannungsvorrichtung (7) und des Verdampfers (9), wobei die zweite Bypassleitung (40) eine dritte Entspannungsvorrichtung (17) umfasst, die stromaufwärts eines Kühlers (15) angeordnet ist,
- eine zweite Wärmeträgerschleife (B), die dazu bestimmt ist, einen Wärmeträger zirkulieren zu lassen,
wobei der Zwei-Fluid-Wärmetauscher (5) gleichzeitig einerseits in der ersten Kältemittelschleife (A) stromabwärts des Kompressors (3) zwischen dem Kompressor (3) und der ersten Entspannungsvorrichtung (7) und andererseits in der zweiten Wärmeträgerschleife (B) eingerichtet ist, **dadurch gekennzeichnet, dass** der Kreislauf zur indirekten Klimasteuerung (1) einen Umführungszweig (80) umfasst, der eine erste Gabelung (81), die stromabwärts des Zwei-Fluid-Wärmetauschers (5) zwischen dem Zwei-Fluid-Wärmetauscher (5) und dem ersten internen Wärmetauscher (19) angeordnet ist, mit einer zweiten Gabelung (82), die stromaufwärts des ersten internen Wärmetauschers (19) zwischen dem ersten internen Wärmetauscher (19) und der ersten Gabelung (81) angeordnet ist, verbindet, wobei die Umführungsschleife (80) einen ersten externen Radiator (84) umfasst, und dass der Kreislauf zur indirekten Klimasteuerung (1) eine Vorrichtung zur Umlenkung des Kältemittels am Ausgang des Zwei-Fluid-Wärmetauschers (5) direkt zu dem ersten internen Wärmetauscher (19) und/oder zu dem Umführungszweig (80) umfasst und dass die Vorrichtung zur Umlenkung des Kältemittels am Ausgang des Zwei-Fluid-Wärmetauschers (5) Folgendes umfasst:
- ein erstes Absperrventil (82a), das in der Hauptschleife (A) stromabwärts der ersten Gabelung (81) zwischen der ersten (81) und der zweiten (82) Gabelung angeordnet ist, und
- ein zweites Absperrventil (82b), das in dem Umführungszweig (80) stromabwärts der ersten Gabelung (81) zwischen der ersten Gabelung (81) und dem ersten externen Radiator (84) angeordnet ist.

2. Vorrichtung zur thermischen Verwaltung nach Anspruch 1, **dadurch gekennzeichnet, dass** die Vorrichtung zur Umlenkung des Kältemittels am Ausgang des Zwei-Fluid-Wärmetauschers (5) ein Dreiwegeventil umfasst, das an der ersten Gabelung (81) angeordnet ist.

3. Vorrichtung zur thermischen Verwaltung nach einem der vorhergehenden Ansprüche, **dadurch gekennzeichnet, dass** der Umführungszweig (80) ein Rückschlagventil (83) umfasst, das stromabwärts des ersten externen Radiators (84) zwischen dem ersten externen Radiator (84) und der zweiten Gabelung (82) angeordnet ist, um das Kältemittel aus Richtung der zweiten Gabelung (82) zu blockieren.

4. Vorrichtung zur thermischen Verwaltung nach einem der vorhergehenden Ansprüche, **dadurch gekennzeichnet, dass** die zweite Wärmeträgerschleife (B) Folgendes umfasst:
- den Zwei-Fluid-Wärmetauscher (5),
- eine erste Leitung (50) zur Wärmeträgerzirkulation, die einen internen Radiator (54) umfasst, der dazu bestimmt ist, von einem Luftstrom (100) innerhalb des Kraftfahrzeugs durchströmt zu werden, und die einen ersten Verbindungspunkt (61), der stromabwärts des Zwei-Fluid-Wärmetauschers (5) angeordnet ist, und einen zweiten Verbindungspunkt (62), der stromaufwärts des Zwei-Fluid-Wärmetauschers (5) angeordnet ist, miteinander verbindet,
- eine zweite Leitung (60) zur Wärmeträgerzirkulation, die einen zweiten externen Radiator (64) umfasst, der dazu bestimmt ist, von einem Luftstrom (200) außerhalb des Kraftfahrzeugs durchströmt zu werden, und die den ersten Verbindungspunkt (61), der stromabwärts des Zwei-Fluid-Wärmetauschers (5) angeordnet ist, und den zweiten Verbindungspunkt (62), der stromaufwärts des Zwei-Fluid-Wärmetauschers (5) angeordnet ist, miteinander verbindet, und
- eine Pumpe (18), die stromabwärts oder stromaufwärts des Zwei-Fluid-Wärmetauschers (5) zwischen dem ersten Verbindungspunkt (61) und dem zweiten Verbindungspunkt (62) angeordnet ist.

5. Vorrichtung zur thermischen Verwaltung nach Anspruch 4, **dadurch gekennzeichnet, dass** sie dazu konfiguriert ist, in einem Kühlmodus zu arbeiten, in dem das Kältemittel in der ersten Kältemittelschleife (A) nacheinander durch Folgendes zirkuliert:
- den Kompressor (3), in dem das Kältemittel auf einen hohen Druck gebracht wird,
- den Zwei-Fluid-Wärmetauscher (5),
- den ersten externen Radiator (84) via den Umführungszweig (80),
- den ersten internen Wärmetauscher (19),
- den zweiten internen Wärmetauscher (19'),
- ein erster Teil des Kältemittels in die zweite Bypassleitung (40) fließt, in die dritte Entspannungsvorrichtung (17) fließt, wo es einen Druckverlust erfährt und auf einen niedrigen Druck gebracht wird, das Niederdruckkältemittel anschließend in den Kühler (15) zirkuliert,
- ein zweiter Teil des Kältemittels in die erste Entspannungsvorrichtung (7), wo es einen Druckverlust erfährt und auf einen niedrigen Druck gebracht wird, den Verdampfer (9) und in die erste Bypassleitung (30) fließt,
wobei sich die zwei Kältemittelteile stromaufwärts des ersten internen Wärmetauschers 19 wieder vereinen, das Kältemittel anschließend mindestens durch den ersten internen Wärmetauscher 19 strömt, bevor es zu dem Kompressor 3 zurückkehrt,
und wobei, in der zweiten Wärmeträgerschleife (B), der Wärmeträger am Ausgang des Zwei-Fluid-Wärmetauschers (5) in den zweiten externen Radiator (64) der zweiten Bypassleitung (60) zirkuliert.

6. Vorrichtung zur thermischen Verwaltung nach Anspruch 4, **dadurch gekennzeichnet, dass** sie dazu konfiguriert ist, in einem Entfeuchtungsmodus zu arbeiten, in dem das Kältemittel in der ersten Kältemittelschleife (A) nacheinander durch Folgendes zirkuliert:
- den Kompressor (3), in dem das Kältemittel auf einen hohen Druck gebracht wird,
- den Zwei-Fluid-Wärmetauscher (5),
- den ersten externen Radiator (84) via den Umführungszweig (80),
- den ersten internen Wärmetauscher (19),
- den zweiten internen Wärmetauscher (19'),
- ein erster Teil des Kältemittels in die zweite Bypassleitung (40) fließt, in die dritte Entspannungsvorrichtung (17) fließt, wo es einen Druckverlust erfährt und auf einen niedrigen Druck gebracht wird, das Niederdruckkältemittel anschließend in den Kühler (15) zirkuliert,
- ein zweiter Teil des Kältemittels in die erste Entspannungsvorrichtung (7), wo es einen Druckverlust erfährt und auf einen niedrigen Druck gebracht wird, den Verdampfer (9), die zweite Entspannungsvorrichtung (11), durch die das Kältemittel ohne Druckverlust strömt, und den Verdampfer-Kondensator (13) fließt,
wobei sich die zwei Kältemittelteile stromaufwärts des ersten internen Wärmetauschers (19) wieder vereinen, das Kältemittel anschließend durch den ersten internen Wärmetauscher (19) strömt, bevor es zu dem Kompressor (3) zurückkehrt,
und wobei, in der zweiten Wärmeträgerschleife (B), der Wärmeträger am Ausgang des Zwei-Fluid-Wärmetauschers (5) in den internen Radiator (54) zirkuliert und Wärmeenergie abgibt.

7. Vorrichtung zur thermischen Verwaltung nach Anspruch 4, **dadurch gekennzeichnet, dass** sie dazu konfiguriert ist, in einem anderen Entfeuchtungsmodus zu arbeiten, in dem das Kältemittel in der ersten Kältemittelschleife (A) nacheinander durch Folgendes zirkuliert:
- den Kompressor (3), in dem das Kältemittel auf einen hohen Druck gebracht wird,
- den Zwei-Fluid-Wärmetauscher (5),
- wobei ein Teil des Kältemittels durch den ersten externen Radiator (84) via den Umführungszweig (80) fließt und ein anderer Teil direkt zu dem ersten internen Wärmetauscher (19) geht,
- den ersten internen Wärmetauscher (19),
- den zweiten internen Wärmetauscher (19'),
- ein erster Teil des Kältemittels in die zweite Bypassleitung (40) fließt, in die dritte Entspannungsvorrichtung (17) fließt, wo es einen Druckverlust erfährt und auf einen niedrigen Druck gebracht wird, das Niederdruckkältemittel anschließend in den Kühler (15) zirkuliert,
- ein zweiter Teil des Kältemittels in die erste Entspannungsvorrichtung (7), wo es einen Druckverlust erfährt und auf einen niedrigen Druck gebracht wird, den Verdampfer (9), die zweite Entspannungsvorrichtung (11), durch die das Kältemittel ohne Druckverlust strömt, und den Verdampfer-Kondensator (13) fließt,
wobei sich der erste und der zweite Kältemittelteil stromaufwärts des ersten internen Wärmetauschers (19) wieder vereinen, das Kältemittel anschließend durch den ersten internen Wärmetauscher (19) strömt, bevor es zu dem Kompressor (3) zurückkehrt,
und wobei, in der zweiten Wärmeträgerschleife (B), der Wärmeträger am Ausgang des Zwei-Fluid-Wärmetauschers (5) in den internen Radiator (54) zirkuliert und Wärmeenergie abgibt.

## Claims

1. Thermal management device comprising an indirect air conditioning circuit (1) for a motor vehicle, comprising:
- a first, refrigerant, loop (A) in which a refrigerant is intended to circulate, said first refrigerant loop (A) comprising, in the direction in which the refrigerant circulates, a compressor (3), a two-fluid heat exchanger (5), a first expansion device (7), an evaporator (9), a second expansion device (11), an evaporator/condenser (13), and
- a first bypass pipe (30) bypassing the evaporator/condenser (13) and comprising a first shut-off valve (33),
- a first internal heat exchanger (19), allowing an exchange of heat between the high-pressure refrigerant leaving the two-fluid heat exchanger (5) and the low-pressure refrigerant leaving the evaporator/condenser (13) or leaving the first bypass pipe (30),
- a second internal heat exchanger (19') allowing an exchange of heat between the high-pressure refrigerant leaving the first internal heat exchanger (19) and the low-pressure refrigerant circulating in the first bypass pipe (30),
- a second bypass pipe (40) bypassing the first expansion device (7) and the evaporator (9), said second bypass pipe (40) comprising a third expansion device (17) sited upstream of a cooler (15),
- a second, coolant, loop (B) in which a coolant is intended to circulate,
the two-fluid heat exchanger (5) being arranged jointly, on the one hand, on the first refrigerant loop (A) downstream of the compressor (3), between said compressor (3) and the first expansion device (7) and, on the other hand, on the second coolant loop (B), **characterized in that** the indirect air conditioning circuit (1) comprises a tapped-off branch (80) connecting a first junction (81) sited downstream of the two-fluid heat exchanger (5), between said two-fluid heat exchanger (5) and the first internal heat exchanger (19), to a second junction (82) sited upstream of the first internal heat exchanger (19), between said first internal heat exchanger (19) and the first junction (81), said tapped-off loop (80) comprising a first external radiator (84), and **in that** the indirect air conditioning circuit (1) comprises a device for redirecting the refrigerant leaving the two-fluid heat exchanger (5) directly towards the first internal heat exchanger (19) and/or towards the tapped-off branch (80), and **in that** said device for redirecting the refrigerant leaving the two-fluid heat exchanger (5) comprises:
- a first shut-off valve (82a) positioned on the main loop (A) downstream of the first junction (81), between the first junction (81) and the second junction (82), and
- a second shut-off valve (82b) positioned on the tapped-off branch (80) downstream of the first junction (81), between the first junction (81) and the first external radiator (84).

2. Thermal management device according to Claim 1, **characterized in that** said device for redirecting the refrigerant leaving the two-fluid heat exchanger (5) comprises a three-way valve positioned at the first junction (81).

3. Thermal management device according to one of the preceding claims, **characterized in that** the tapped-off branch (80) comprises a nonreturn valve (83) arranged downstream of the first external radiator (84), between said first external radiator (84) and the second junction (82), so as to block off refrigerant coming from said second junction (82).

4. Thermal management device according to one of the preceding claims, **characterized in that** the second coolant loop (B) comprises:
- the two-fluid heat exchanger (5),
- a first coolant circulation pipe (50) comprising an internal radiator (54) through which an air flow (100) interior to the motor vehicle is intended to pass and which connects a first junction point (61) arranged downstream of the two-fluid heat exchanger (5) and a second junction point (62) arranged upstream of said two-fluid heat exchanger (5),
- a second coolant circulation pipe (60) comprising a second external radiator (64) through which an air flow (200) exterior to the motor vehicle is intended to pass and which connects the first junction point (61) arranged downstream of the two-fluid heat exchanger (5) and the second junction point (62) arranged upstream of said two-fluid heat exchanger (5), and
- a pump (18) arranged downstream or upstream of the two-fluid heat exchanger (5), between the first junction point (61) and the second junction point (62).

5. Thermal management device according to Claim 4, **characterized in that** it is configured to operate in a cooling mode in which the refrigerant circulates in the first refrigerant loop (A) through, in succession:
- the compressor (3), where the refrigerant is raised to a high pressure,
- the two-fluid heat exchanger (5),
- the first external radiator (84), via the tapped-off branch (80),
- the first internal heat exchanger (19),
- the second internal heat exchanger (19'),
- a first portion of the refrigerant enters the second bypass pipe (40), enters the third expansion device (17) where it experiences a drop in pressure and drops to a low pressure, said low-pressure refrigerant then circulating through the cooler (15),
- a second portion of the refrigerant enters the first expansion device (7) where it experiences a drop in pressure and drops to a low pressure, the evaporator (9) and the first bypass pipe (30),
the two portions of refrigerant meeting again upstream of the first internal heat exchanger (19), and the refrigerant then passing through at least the first internal heat exchanger (19) before returning to the compressor (3),
and wherein, in the second coolant loop (B), the coolant leaving the two-fluid heat exchanger (5) circulates through the second external radiator (64) of the second circulation pipe (60).

6. Thermal management device according to Claim 4, **characterized in that** it is configured to operate in a dehumidification mode in which the refrigerant circulates in the first refrigerant loop (A) through, in succession:
- the compressor (3) where the refrigerant is raised to a high pressure,
- the two-fluid heat exchanger (5),
- the first external radiator (84) via the tapped-off branch (80),
- the first internal heat exchanger (19),
- the second internal heat exchanger (19'),
- a first portion of the refrigerant enters the second bypass pipe (40), enters the third expansion device (17) where it experiences a drop in pressure and drops to a low pressure, said low-pressure refrigerant then circulating through the cooler (15),
- a second portion of the refrigerant enters the first expansion device (7) where it experiences a drop in pressure and drops to a low pressure, the evaporator (9), the second expansion device (11) through which the refrigerant passes without a drop in pressure, and the evaporator/condenser (13),
the two portions of refrigerant meeting again upstream of the first internal heat exchanger (19), the refrigerant then passing through the first internal heat exchanger (19) before returning to the compressor (3),
and wherein, in the second coolant loop (B), the coolant leaving the two-fluid heat exchanger (5) circulates through the internal radiator (54) and gives up heat energy.

7. Thermal management device according to Claim 4, **characterized in that** it is configured to operate in another dehumidification mode in which the refrigerant circulates in the first refrigerant loop (A) through, in succession:
- the compressor (3) where the refrigerant is raised to a high pressure,
- the two-fluid heat exchanger (5),
- one portion of the refrigerant passing through the first external radiator (84) via the tapped-off branch (80) and another portion passing directly towards the first internal heat exchanger (19),
- the first internal heat exchanger (19),
- the second internal heat exchanger (19'),
- a first portion of the refrigerant enters the second bypass pipe (40), enters the third expansion device (17) where it experiences a drop in pressure and drops to a low pressure, said low-pressure refrigerant then circulating through the cooler (15),
- a second portion of the refrigerant enters the first expansion device (7) where it experiences a drop in pressure and drops to a low pressure, the evaporator (9), the second expansion device (11) through which the refrigerant passes without a drop in pressure, and the evaporator/condenser (13),
the first and second portions of refrigerant meeting again upstream of the first internal heat exchanger (19), the refrigerant then passing through the first internal heat exchanger (19) before returning to the compressor (3),
and wherein, in the second coolant loop (B), the coolant leaving the two-fluid heat exchanger (5) circulates through the internal radiator (54) and gives up heat energy.
